# EUROPEAN PATENT APPLICATION

(11) **EP 4 723 271 A1**
(43) Date of publication of application: **08.04.2026**
(21) Application number: 24863956.9
(22) Date of filing: 02.01.2024
(51) Int. Cl.: H01M 10/0525, H01M 10/0587, H01M 50/531, H01M 50/503, H01M 50/528, H01M 50/586, H01M 50/213, H01M 50/249

(54) **BATTERY CELL, BATTERY, AND ELECTRIC DEVICE**

(30) Priority: 14.09.2023 CN 202311186339
(71) Applicant: Contemporary Amperex Technology Co., Limited, Ningde, Fujian 352100 (CN)
(72) Inventor: XU, Hu, Ningde, Fujian 352100 (CN); GUO, Jipeng, Ningde, Fujian 352100 (CN)
(74) Representative: Gong, Jinping
(86) International application number: PCT/CN2024/070225
(87) International publication number: WO 2025/055222

(57) **Abstract**

A battery cell, a battery, and an electrical apparatus are disclosed in the present application. The battery cell includes a shell, an electrode terminal, an electrode assembly, a first adapter, and a second adapter. The shell has a first wall. The electrode terminal is mounted on the first wall in an insulated manner. The electrode assembly includes a main body part, a first tab, and a second tab. The first tab and the second tab have opposite polarities. In a thickness direction of the first wall, the first tab and the second tab are both arranged at one end of the main body part facing the first wall. The first adapter includes a first connecting portion and a second connecting portion, the first connecting portion is connected to the first wall, and the second connecting portion is connected to the first tab. The second adapter connects the electrode terminal and the second tab. In the thickness direction of the first wall, an orthographic projection of the first adapter does not overlap an orthographic projection of the second adapter, and in the thickness direction of the first wall, an orthographic projection of the first connecting portion does not overlap an orthographic projection of the second tab. The technical solution provided in the present application is capable of improving the reliability of batteries.

## Description

### CROSS-REFERENCE TO RELATED APPLICATIONS

The present application claims the priority of Chinese Patent Application No. 202311186339.0 filed on September 14, 2023 and entitled "BATTERY CELL, BATTERY, AND ELECTRICAL APPARATUS", which is incorporated herein by reference in its entirety.

### TECHNICAL FIELD

The present application relates to the field of battery technologies, and in particular, to a battery cell, a battery, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding development thereof.

Therefore, how to improve the reliability of the battery is an urgent technical problem to be solved in the development of the battery technologies.

### SUMMARY OF THE INVENTION

The present application provides a battery cell, a battery, and an electrical apparatus. Technical solutions provided in the present application can improve the reliability of the battery.

The present application is implemented through the following technical solutions:
In a first aspect, the present application provides a battery cell, which includes a shell, an electrode terminal, an electrode assembly, a first adapter, and a second adapter. The shell has a first wall. The electrode terminal is mounted on the first wall in an insulated manner. The electrode assembly is accommodated in the shell, and the electrode assembly includes a main body part, a first tab, and a second tab. The first tab and the second tab have opposite polarities. In a thickness direction of the first wall, the first tab and the second tab are both arranged at one end of the main body part facing the first wall. The first adapter includes a first connecting portion and a second connecting portion, the first connecting portion is connected to the first wall, and the second connecting portion is connected to the first tab. The second adapter connects the electrode terminal and the second tab. In the thickness direction of the first wall, an orthographic projection of the first adapter does not overlap an orthographic projection of the second adapter, and in the thickness direction of the first wall, an orthographic projection of the first connecting portion does not overlap an orthographic projection of the second tab.

In the above technical solution, by arranging the first tab and the second tab of the electrode assembly on the same end face of the main body part, it is conducive to saving space occupied by the electrode assembly in a direction from the electrode assembly to the first wall, so as to improve the energy density of the battery cell having such an electrode assembly. In the thickness direction of the first wall, by setting the orthographic projection of the first adapter to not overlap the orthographic projection of the second adapter, the risk of internal short circuit of the battery cell caused by the first adapter and the second adapter overlapping each other is capable of being reduced, so that the battery has high reliability. By providing the first connecting portion connected to the first wall and the second connecting portion connected to the first tab, it is capable of facilitating an electrical connection between the first wall and the first tab, thereby reducing the risk of internal open circuit in the battery cell due to failure of the connection between the first adapter and the first tab or failure of the connection between the first adapter and the first wall. In the thickness direction of the first wall, by setting the orthographic projection of the first connecting portion to not overlap the orthographic projection of the second tab, the first connecting portion does not occupy space between the second tab and the first wall, which is capable of effectively reducing the risk of internal short circuit of the battery cell caused by the first adapter and the second adapter overlapping each other, so that the battery has high reliability.

According to some embodiments of the present application, the first connecting portion has a first surface in contact with the first wall, and the second connecting portion has a second surface in contact with the first tab. In the thickness direction of the first wall, there is a height difference h1 between the first surface and the second surface, meeting h1≤3 mm.

In the above technical solution, by setting the height difference h1 between the first surface and the second surface to be less than or equal to 3 mm, on the one hand, the first surface of the first connecting portion is capable of being connected to the first wall to achieve stable transmission of a current between the first tab and the first wall. On the other hand, it is capable of reducing the risk of damage to the first wall, the first adapter, or the first tab due to compression as the first adapter is too thick and interferes with the first wall, and therefore, the reliability of the battery is improved.

According to some embodiments of the present application, a cross-sectional area of the main body part is S, an area of the first surface is S1, and an area of the second surface is S2, meeting S1+S2≤S/2.

In the above technical solution, by setting a sum of the area S1 of the first surface and the area S2 of the second surface to be no greater than half of the cross-sectional area S of the main body part, on the one hand, large contact areas are capable of being provided between the first adapter and the first tab and between the first adapter and the first wall, so that the current can be stably transmitted between the first tab and the first wall. On the other hand, it is capable of reducing the risk of affecting the positive and negative current output and input performance of the battery cell due to the excessively small contact surface between the second adapter and the second tab or contact area between the second adapter and the electrode terminal as the first adapter occupying an excessively large area, and therefore, the battery has strong performance.

According to some embodiments of the present application, the first adapter further includes a transition portion, and the transition portion extends from an edge of the second connecting portion in a direction approaching the first wall, and the transition portion connects the first connecting portion and the second connecting portion.

In the above technical solution, by arranging the transition portion, on the one hand, the first connecting portion and the second connecting portion are capable of being effectively connected, so that the first adapter can effectively and stably connect the first wall and the first tab, thereby reducing the risk of open circuit between the first wall and the first tab, and therefore, the battery has high reliability. On the other hand, by arranging the transition portion to extend from the edge of the second connecting portion, the space between the electrode assembly and the first wall is capable of being reasonably utilized, and the contact areas between the first adapter and the first wall and between the first adapter and the first tab can be increased, which is capable of effectively improving the current flow capacity between the first tab and the first wall, thereby being conducive to improving the performance of the battery.

According to some embodiments of the present application, in the thickness direction of the first wall, the orthographic projection of the first connecting portion is arc-shaped.

In the above technical solution, in the thickness direction of the first wall, by setting the orthographic projection of the first connecting portion to be arc-shaped, on the one hand, when the battery cell is a cylindrical battery cell, it is capable of being reasonably conducive to the space between the electrode assembly and the first wall, so that there is a larger electrical connection area between the first tab and the first wall. On the other hand, compared with the solution in which the first connecting portion is ring-shaped and arranged in a circle around an outer circumference of the first wall, the technical solution is capable of effectively reducing the risk of internal short circuit in the battery cell caused by the first adapter and the second adapter overlapping each other, and therefore, the battery has high reliability.

According to some embodiments of the present application, in the thickness direction of the first wall, the orthographic projection of the first connecting portion is ring-shaped, the orthographic projection of the first connecting portion surrounds the orthographic projection of the second connecting portion, and the orthographic projection of the second adapter is located outside the orthographic projection of the first connecting portion.

In the above technical solution, in the thickness direction of the first wall, by setting the orthographic projection of the first connecting portion to be ring-shaped and surround the orthographic projection of the second connecting portion, a contact connection between the first connecting portion and the first wall is capable of being improved, which is conducive to improving the current flow capacity between the first tab and the first wall. By setting the orthographic projection of the second adapter to be located outside the orthographic projection of the first connecting portion, the risk of internal short circuit of the battery cell caused by the first adapter and the second adapter overlapping each other is capable of being effectively reduced, so that the battery has high reliability.

According to some embodiments of the present application, in a peripheral direction of the electrode assembly, a central angle corresponding to the first connecting portion is α, meeting 0<α≤180°.

In the above technical solution, by setting the central angle α corresponding to the first connecting portion to be less than or equal to 180°, on the one hand, the first connecting portion is capable of being caused to not occupy too much space between the electrode assembly and the first wall, so that there is a large connection area between the second adapter and the electrode terminal and between the second adapter and the second tab, and therefore, the battery has strong performance. On the other hand, the first connecting portion is capable of being kept away from the second adapter, thereby reducing the risk of internal short circuit of the battery cell caused by the first connecting portion and the second adapter overlapping each other, so that the battery has high reliability.

According to some embodiments of the present application, 0<α≤120° is met.

In the above technical solution, by setting the central angle α corresponding to the first connecting portion to be less than or equal to 120°, on the one hand, there is a large connection area between the second adapter and the electrode terminal and between the second adapter and the second tab, and therefore, the battery has strong performance. On the other hand, the first connecting portion is capable of being kept away from the second adapter as much as possible, thereby reducing the risk of internal short circuit of the battery cell caused by the first connecting portion and the second adapter overlapping each other, so that the battery has high reliability.

According to some embodiments of the present application, the second adapter includes a third connecting portion and a fourth connecting portion, the third connecting portion is connected to the electrode terminal, and the fourth connecting portion is connected to the second tab. In the thickness direction of the first wall, an orthographic projection of the third connecting portion does not overlap an orthographic projection of the fourth connecting portion.

In the above technical solution, the electrode terminal and the second tab are respectively connected by the third connecting portion and the fourth connecting portion, which is capable of effectively improving the connection stability between the second tab and the electrode terminal, reducing the risk of open circuit between the second tab and the electrode terminal, and improving the reliability of the battery. In the thickness direction of the first wall, by setting the orthographic projection of the third connecting portion to not overlap the orthographic projection of the fourth connecting portion, the second adapter is capable of being respectively connected to the electrode terminal and the second tab at different portions, thereby reducing the difficulty of assembling the second adapter, improving the manufacturing efficiency of the battery cell, and further improving the manufacturing efficiency of the battery.

According to some embodiments of the present application, the third connecting portion has a third surface in contact with the electrode terminal, and the fourth connecting portion has a fourth surface in contact with the second tab. In the thickness direction of the first wall, there is a height difference h2 between the third surface and the fourth surface, meeting h2≤3 mm.

In the above technical solution, by setting the height difference h2 between the third surface and the fourth surface to be less than or equal to 3 mm, on the one hand, the third surface of the third connecting portion is capable of being connected to the electrode terminal to achieve stable transmission of a current between the second tab and the electrode terminal. On the other hand, it is capable of reducing the risk of damage to the electrode terminal, the second adapter, or the second tab due to compression as the second adapter is too thick and interferes with the electrode terminal, and therefore, the reliability of the battery is improved.

According to some embodiments of the present application, the cross-sectional area of the main body part is S, an area of the third surface is S3, and an area of the fourth surface is S4, meeting S3+S4≤S/2.

In the above technical solution, by setting a sum of the area S3 of the third surface and the area S4 of the fourth surface to be no greater than half of the cross-sectional area S of the main body part, on the one hand, large contact areas are capable of being provided between the second adapter and the second tab and between the second adapter and the electrode terminal, so that the current can be stably transmitted between the second tab and the electrode terminal. On the other hand, it is capable of reducing the risk of affecting the positive and negative current output and input performance of the battery cell due to the excessively small contact surface between the first adapter and the first tab or contact area between the first adapter and the first wall as the second adapter occupying an excessively large area, and therefore, the battery has strong performance.

According to some embodiments of the present application, the electrode assembly is a wound electrode assembly, the main body part has a central through hole, the central through hole penetrates the main body part in an axial direction of the main body part, and the third connecting portion covers at least part of the central through hole.

In the above technical solution, by arranging the third connecting portion to cover at least part of the central through hole, on the one hand, the second adapter can reasonably utilize the space located between the electrode assembly and the first wall and corresponding to the central through hole, so that the second adapter has a large surface area, which is conducive to current transmission between the second tab and the electrode terminal and to improving the performance of the battery. On the other hand, at least part of the third connecting portion can be kept away from the second tab, that is, a connecting portion between the second adapter and the electrode terminal and a connecting portion between the second adapter and the second tab are kept away from each other, thereby reducing the difficulty of assembling the second adapter and improving the manufacturing efficiency of the battery.

According to some embodiments of the present application, the battery cell further includes an insulating member, the insulating member is located between the electrode assembly and the first wall, and the insulating member insulates and isolates the first adapter from the second adapter.

In the above technical solution, by arranging the insulating member to insulate and isolate the first adapter from the second adapter, the risk of internal short circuit of the battery cell caused by the first adapter and the second adapter overlapping each other is capable of being reduced, so that the battery has high reliability.

According to some embodiments of the present application, the insulating member includes an insulating body and a partitioning portion. The insulating body is a ring-shaped structure arranged in the peripheral direction of the electrode assembly. The insulating body insulates and isolates the second adapter from the shell. The partitioning portion is connected to an inner ring surface of the insulating body. The partitioning portion insulates and isolates the first adapter from the second adapter.

In the above technical solution, by arranging the insulating member, the risk of internal short circuit of the battery cell caused by overlapping of the first adapter and the second adapter is capable of being effectively reduced, so that the battery has high reliability. The insulating member includes the ring-shaped insulating body, which is capable of effectively insulating and isolating the second adapter from the shell, thereby effectively reducing the risk of internal short circuit of the battery cell caused by overlapping of the second adapter and the shell, so that the battery has high reliability.

According to some embodiments of the present application, the electrode assembly includes a first electrode plate and a second electrode plate, and the electrode assembly is a wound electrode assembly. The first electrode plate includes a plurality of first sub-tabs, and the plurality of first sub-tabs form the first tab. The first electrode plate of the innermost n1 turn is not provided with the first sub-tab, and n1≥1. And/or, the second electrode plate includes a plurality of second sub-tabs, and the plurality of second sub-tabs form the second tab. The second electrode plate of the innermost n2 turn is not provided with the second sub-tab, and n2≥1.

In the above technical solution, by not arranging the first sub-tab on the first electrode plate of the innermost n1 turn, the first tab and the second tab are capable of being effectively arranged at an interval, thereby reducing the risk of short circuit between the first tab and the second tab, which is conducive to improving the reliability of the battery. Likewise, by not arranging the second sub-tab on the second electrode plate of the innermost n2 turn, the second tab and the first tab are capable of being effectively arranged at an interval, thereby reducing the risk of short circuit between the second tab and the first tab, which is conducive to improving the reliability of the battery.

According to some embodiments of the present application, the electrode assembly includes a first electrode plate and a second electrode plate, and the electrode assembly is a wound electrode assembly. The first electrode plate includes a plurality of first sub-tabs, and the plurality of first sub-tabs form the first tab. The first electrode plate of the outermost m1 turn is not provided with the first sub-tab, and m1≥1. And/or, the second electrode plate includes a plurality of second sub-tabs, and the plurality of second sub-tabs form the second tab. The second electrode plate of the outermost m2 turn is not provided with the second sub-tab, and m2≥1.

In the above technical solution, by not arranging the first sub-tab on the first electrode plate of the outermost m1 turn, the first tab and the side wall of the shell are capable of being effectively arranged at an interval, thereby reducing the risk of short circuit between the first tab and the shell, which is conducive to improving the reliability of the battery. By not arranging the second sub-tab on the second electrode plate of the outermost m2 turn, the second tab and the first wall tab are capable of being effectively arranged at an interval, thereby reducing the risk of damage to the second tab due to the interference between the second tab and the shell when the electrode assembly is placed in the shell, which is conducive to improving the reliability of the battery.

According to some embodiments of the present application, the electrode assembly is a wound electrode assembly, the first tab includes a plurality of first sub-tabs, and each of the first sub-tabs has the same size in a winding direction of the electrode assembly. Alternatively, in a direction from the inner turn to the outer turn of the electrode assembly, the sizes of the plurality of first sub-tabs gradually increase in the winding direction of the electrode assembly.

In the above technical solution, in some embodiments, by setting the size of each of the first sub-tabs in the winding direction of the electrode assembly to the same size, the processing difficulty of the first sub-tabs can be reduced (for example, when die-cutting the tabs, the die-cutting size of each of the first sub-tabs is the same, and therefore, the die-cutting efficiency is high), thereby improving the manufacturing efficiency of the battery. In some embodiments, in the direction from the inner turn to the outer turn of the electrode assembly, by setting the sizes of the plurality of first sub-tabs in the winding direction of the electrode assembly to gradually increase, the first tab is capable of fully utilizing the internal space of the shell, so that the first tab has a large area to improve the current flow capacity between the first tab and the electrode terminal, and therefore the battery has desirable charging and discharging performance.

According to some embodiments of the present application, the electrode assembly is a wound electrode assembly, the second tab includes a plurality of second sub-tabs, and each of the second sub-tabs has the same size in the winding direction of the electrode assembly. Alternatively, in the direction from the inner turn to the outer turn of the electrode assembly, the sizes of the plurality of second sub-tabs gradually increase in the winding direction of the electrode assembly.

In the above technical solution, in the above technical solution, in some embodiments, by setting the size of each of the second sub-tabs in the winding direction of the electrode assembly to the same size, the processing difficulty of the second sub-tabs can be reduced (for example, when die-cutting the tabs, the die-cutting size of each of the second sub-tabs is the same, and therefore, the die-cutting efficiency is high), thereby improving the manufacturing efficiency of the battery. In some embodiments, in the direction from the inner turn to the outer turn of the electrode assembly, by setting the sizes of the plurality of second sub-tabs in the winding direction of the electrode assembly to gradually increase, the second tab is capable of fully utilizing the internal space of the shell, so that the second tab has a large area to improve the current flow capacity between the second tab and the shell, and therefore the battery has desirable charging and discharging performance.

According to some embodiments of the present application, the first tab has a fifth surface facing the first wall, and the fifth surface is sector-shaped.

In the above technical solution, by setting the fifth surface of the first tab to a sector-shaped structure, the first tab is capable of fully utilizing the internal space of the shell, so that the first tab has a large area to improve the current flow capacity between the first tab and the first wall, and therefore the battery has desirable charging and discharging performance.

According to some embodiments of the present application, in the peripheral direction of the main body part, the fifth surface has a first edge and a second edge that are far away from each other, and an angle between the first edge and the second edge is β1, where 0<β1≤180°.

In the above technical solution, by setting the angle β1 formed between the first edge and the second edge of the first tab to be less than or equal to 180 degrees, a central angle of the fifth surface of the sector-shaped first tab is less than or equal to 180 degrees, so as to alleviate the phenomenon of internal short circuit of the battery cell caused by easy overlapping of the first tab and the second tab due to the large space occupied by the first tab, so that the battery has high reliability.

According to some embodiments of the present application, the second tab has a sixth surface facing the first wall, and the sixth surface is sector-shaped.

In the above technical solution, by setting the sixth surface of the second tab to a sector-shaped structure, the second tab is capable of fully utilizing the internal space of the shell, so that the second tab has a large area to improve the current flow capacity between the second tab and the electrode terminal, and therefore the battery has desirable charging and discharging performance.

According to some embodiments of the present application, in the peripheral direction of the main body part, the sixth surface has a third edge and a fourth edge that are far away from each other, and an angle between the third edge and the fourth edge is β2, where 0<β2≤270°.

In the above technical solution, by setting the angle β2 formed between the third edge and the fourth edge of the second tab to be less than or equal to 270 degrees, a central angle of the second surface of the sector-shaped second tab is less than or equal to 270 degrees, so as to alleviate the phenomenon of internal short circuit of the battery cell caused by easy overlapping of the second tab and the first tab due to the large space occupied by the second tab, so that the battery has high reliability.

In a second aspect, some embodiments of the present application further provide a battery, and the battery includes the battery cell provided in the first aspect.

In a third aspect, some embodiments of the present application further provide an electrical apparatus, and the electrical apparatus includes the battery cell provided in, for example, the first aspect, and the battery cell is configured to provide electric energy.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle according to some embodiments of the present application;
FIG. 2 is an exploded three-dimensional diagram of a battery according to some embodiments of the present application;
FIG. 3 is a three-dimensional diagram of a battery cell according to some embodiments of the present application;
FIG. 4 is an exploded three-dimensional diagram of a battery cell according to some embodiments of the present application;
FIG. 5 is a schematic diagram of a first adapter and a second adapter according to some embodiments of the present application;
FIG. 6 is a schematic diagram of an orthographic projection of a first adapter and an orthographic projection of a second adapter according to some embodiments of the present application;
FIG. 7 is a schematic diagram of interior of a local structure of a first adapter according to some embodiments of the present application;
FIG. 8 is a schematic diagram of a first adapter and a second adapter according to some embodiments of the present application;
FIG. 9 is a schematic diagram of a first adapter and a second adapter according to some embodiments of the present application;
FIG. 10 is a schematic diagram of a first adapter and a second adapter according to some embodiments of the present application;
FIG. 11 is a schematic diagram of an orthographic projection of a first adapter and an orthographic projection of a second adapter according to some embodiments of the present application;
FIG. 12 is a schematic diagram of a first adapter according to other embodiments of the present application;
FIG. 13 is a schematic diagram of an insulating member, a first adapter, and a second adapter according to some embodiments of the present application;
FIG. 14 is a top view of an electrode assembly according to some embodiments of the present application; and
FIG. 15 is a top view of an electrode assembly according to some embodiments of the present application.

Reference numerals: 100-Battery; 10-Battery cell; 11-Shell; 110-First wall; 111-Case; 112-Bottom plate; 12-Electrode terminal; 13-Electrode assembly; 130-Main body part; 1300-Central through hole; 131-First tab; 1310-Fifth surface; 1311-First sub-tab; 13100-First edge; 13101-Second edge; 132-Second tab; 1320-Sixth surface; 1321-Second sub-tab; 13200-Third edge; 13201-Fourth edge; 14-First adapter; 140-First connecting portion; 1400-First surface; 141-Second connecting portion; 1410-Second surface; 142-Transition portion; 15-Second adapter; 150-Third connecting portion; 1500-Third surface; 151-Fourth connecting portion; 1510-Fourth surface; 16-Insulating member; 160-Insulating body; 161-Partitioning portion; x-Thickness direction of the first wall; y-Peripheral direction of the main body part; 1000-Vehicle; 200-Controller; 300-Motor; 20-Box; 21-First box body; 22-Second box body.

### DETAILED DESCRIPTION

In order to make the objects, technical solutions, and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first", "second", and the like in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection", and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode, and a spacer. During charging and discharging of the battery cell, active ions (such as lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon-fine electrode, carbon, nickel, titanium, or the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

By way of example, the positive electrode active material may include at least one of the following materials: lithium-containing phosphate, lithium transition metal oxide, and respective modified compounds thereof. However, the present application is not limited to these materials, and other conventional materials useful as positive electrode active materials for batteries can also be used. One of these positive active materials may be used alone, or two or more of these positive active materials may be used in combination. Examples of the lithium-containing phosphate may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁)), lithium nickel cobalt aluminum oxide (e.g., LiNi_{0.85}Co_{0.15}Al_{0.05}O₂), and a modified compound thereof, and the like.

In some embodiments, a foam metal may be used as the positive electrode. The foam metal may be foam nickel, foam copper, foam aluminum, foam alloy, foam carbon, or the like. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

For example, a metal foil, a foam metal, or a composite current collector may be used as the negative electrode current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, foam carbon, or the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a polymer material substrate (such as a substrate of polypropylene, polyethylene terephthalate, polybutylene terephthalate, polystyrene, or polyethylene).

For example, the negative electrode plate may include a negative electrode current collector and a negative active material arranged on at least one surface of the negative electrode current collector.

For example, the negative electrode current collector has two surfaces opposite to each other in its own thickness direction, and the negative active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these negative active materials may be used in combination.

In some embodiments, the material of the positive electrode current collector may be aluminum, and the material of the negative electrode current collector may be copper.

In some implementations, the electrode assembly further includes a spacer, and the spacer is arranged between the positive electrode and the negative electrode.

In some implementations, the spacer is a separator. There may be various types of separators, and any well-known separator with a porous structure having good chemical stability and mechanical stability may be selected.

As an example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some embodiments, the spacer is a solid electrolyte. The solid electrolyte is arranged between the positive electrode and the negative electrode and plays a role of transmitting ions and isolates the positive electrode from the negative electrode.

In some embodiments, the battery cell further includes an electrolyte, and the electrolyte plays a role in conducting ions between the positive electrode and the negative electrode. The electrolyte may be liquid, gel, or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some implementations, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, methyl ethyl sulfone, and ethyl sulfone. The solvent can be ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

As an example, the polymer solid electrolyte can be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

As an example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

As an example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is provided with a tab. The tab may conduct current out from the electrode assembly. The tab includes a positive tab and a negative tab.

In some implementations, the battery cell may include a shell. The shell is configured to encapsulate components such as the electrode assembly and the electrolyte. The shell may be a steel shell, an aluminum shell, a plastic shell (such as polypropylene), nickel steel, stainless steel, a composite metal shell (such as a copper-aluminum composite shell), an aluminum-plastic film, or the like.

As an example, the battery cell may be a cylindrical battery cell or a prismatic battery cell.

A battery mentioned in the embodiments of the present application is a single physical module including one or a plurality of battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide adaptability, and low self-discharge coefficient, thus being an important component of today's new energy development.

A battery cell generally includes a shell and an electrode assembly accommodated in the shell. The electrode assembly includes a main body part and a tab arranged on the main body part. The tab is configured to output or input electrical energy of the electrode assembly. In order to save the space occupied by the electrode assembly in the shell and to improve the energy density of the battery cell, especially in a battery cell with a cylindrical structure, in the related art, the positive and negative tabs of the electrode assembly are usually arranged at the same end of the main body part to realize a structure in which the electrode assembly has the tabs on the same side, so as to save the space occupied by the electrode assembly in the shell. The positive and negative tabs include a first tab and a second tab, and the first tab is electrically connected to the first wall of the shell through a first adapter. The second tab is electrically connected to the electrode terminal arranged on the first wall through the second adapter.

Therefore, how to improve the reliability of the battery is an urgent technical problem to be solved in the development of the battery technologies. Currently, in the battery cell in which the first tab and the second tab are both arranged at the same end of the main body part, there is a spatially overlapping portion between the first adapter and the second adapter in the thickness direction of the first wall. When the battery cell is impacted, the first adapter and the second adapter are deformed or detached, and there is a risk of overlap in the thickness direction of the first wall, which may cause an internal short circuit of the battery cell and affect the reliability of the battery.

In view of this, in order to alleviate the problem that the overlap between the first adapter and the second adapter causes a short circuit in the battery cell and affects the reliability of the battery, some embodiments of the present application provide a battery cell in which an electrode assembly has tabs on the same side, and in a thickness direction of a first wall of the battery cell, an orthographic projection of a first adapter is set to not overlap with an orthographic projection of the second adapter.

In the above technical solution, in the thickness direction of the first wall, by setting the orthographic projection of the first adapter to not overlap the orthographic projection of the second adapter, the risk of internal short circuit of the battery cell caused by the first adapter and the second adapter overlapping each other is capable of being reduced, so that the battery has high reliability.

The electrode assembly disclosed in the embodiments of the present application can be used, but is not limited to, in an electrical apparatus, such as a vehicle, a ship, or an aircraft. A power supply system of the electrical apparatus can be formed by the battery cell, the battery, and the like disclosed in the present application, and in this way, it is conducive to alleviating the problem of internal short circuit of the battery cell due to overlapping of the tab and the shell to cause low reliability of the battery.

An embodiment of the present application provides an electrical apparatus in which a battery is used as a power source. The electrical apparatus may be, but is not limited to, a mobile phone, a tablet, a laptop computer, an electric toy, an electric tool, a storage battery car, an electric vehicle, a ship, a spacecraft, and the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For the convenience of description in the following embodiments, an electrical apparatus being a vehicle according to an embodiment of the present application is taken as an example for the description.

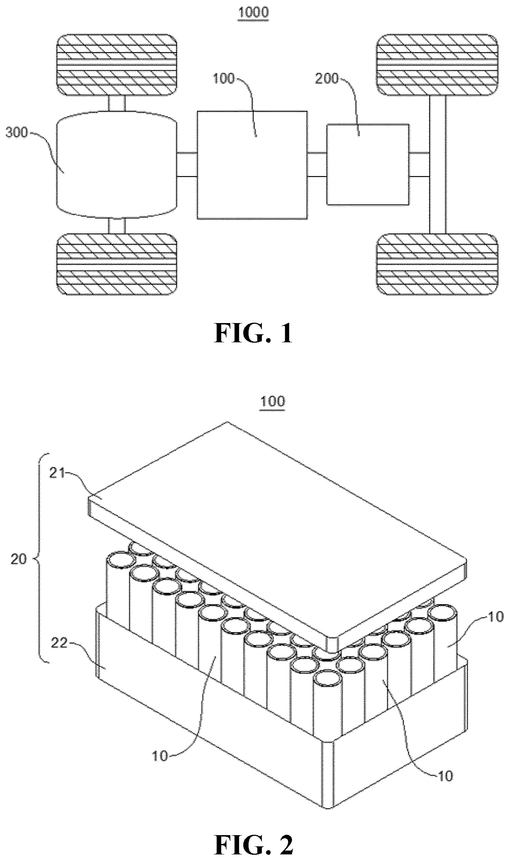

Referring to FIG. 1, FIG. 1 is a schematic structural diagram of a vehicle according to some embodiments of the present application. The vehicle may be a fuel vehicle, a gas vehicle, or a new energy vehicle, and the new energy vehicle may be an all-electric vehicle, a hybrid electric vehicle, an extended range electric vehicle, or the like. A battery 100 is provided in the vehicle 1000. The battery 100 may be arranged at the bottom of the vehicle, or the head of the vehicle 1000, or the tail of the vehicle 1000. The battery 100 may be used for supplying power to the vehicle 1000. For example, the battery 100 may be used as an operating power source or usage power source for the vehicle 1000. The vehicle may further include a controller 200 and a motor 300. The controller 200 is used to control the battery 100 to supply power to the motor 300, for example, for the operating power demand when the vehicle 1000 is starting, navigating, and driving.

In some embodiments of the present application, the battery 100 can not only be used as the operating power source or usage power source for the vehicle, but also as the driving power source for the vehicle, to replace or partially replace fuel or natural gas to provide driving power for the vehicle.

Referring to FIG. 2, FIG. 2 is a three-dimensional exploded view of a battery 100 according to some embodiments of the present application. The battery 100 includes a box 20 and a battery cell 10. The battery cell 10 is configured to be accommodated in the box 20.

The box 20 is configured to provide an assembling space for the battery cell 10, and the box 20 may be of a variety of structures. In some embodiments, the box 20 includes a first box body 21 and a second box body 22. The first box body 21 and the second box body 22 cover each other, and the first box body 21 and the second box body 22 together define an assembling space for accommodating the battery cell 10. The second box body 22 may be of a hollow structure with one end open, the first box body 21 may be of a plate-like structure, and the first box body 21 covers the opening side of the second box body 22, so that the first box body 21 and the second box body 22 together define the assembling space. Both of the first box body 21 and the second box body 22 may also be of a hollow structure with one side open, and the opening side of the first box body 21 covers the opening side of the second box body 22.

Of course, the box 20 formed by the first box body 21 and the second box body 22 may be in a variety of shapes, such as a cylinder, a rectangular solid, a cuboid, or the like. For example, in FIG. 2, the box 20 is in a rectangular solid shape.

In the battery 100, there may be one or a plurality of battery cells 10 arranged in the box 20. If a plurality of battery cells 10 are arranged in the box 20, the plurality of battery cells 10 may be connected in series, in parallel, or in parallel-series, where the parallel-series connection means that the plurality of battery cells 10 are connected both in series and in parallel. The plurality of battery cells 10 may be directly connected in series, in parallel, or in parallel-series, and then the entirety formed by the plurality of battery cells 10 is accommodated in the box 20. Of course, the battery 100 may also be an entirety formed by connecting the plurality of battery cells 10 in series, in parallel, or in parallel-series to form battery modules and then connecting the plurality of battery modules in series, in parallel, or in parallel-series, and is then accommodated in the box 20.

In some embodiments, the battery 100 may further include other structures. For example, the battery 100 may further include a busbar component, and the busbar component is configured to connect the plurality of battery cells 10 so as to realize the electrical connections between the plurality of battery cells 10.

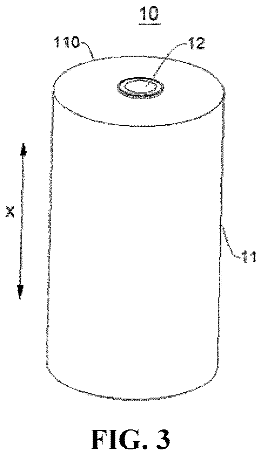

Each of the battery cells 10 may be a secondary battery or a primary battery; or it may be a lithium-sulfur battery, a sodium-ion battery, or a magnesium-ion battery, but is not limited thereto. The battery cell 10 may be in cylindrical-shaped, prismatic-shaped, or in other shapes, or the like. For example, in FIG. 3, the battery cell 10 is a cylindrical structure.

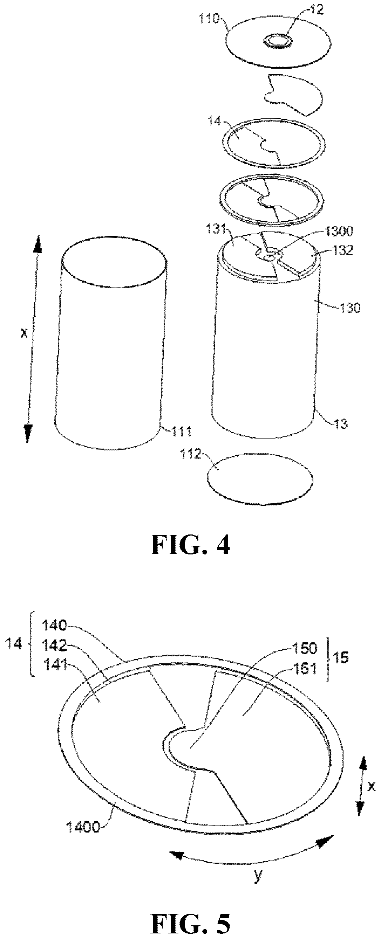

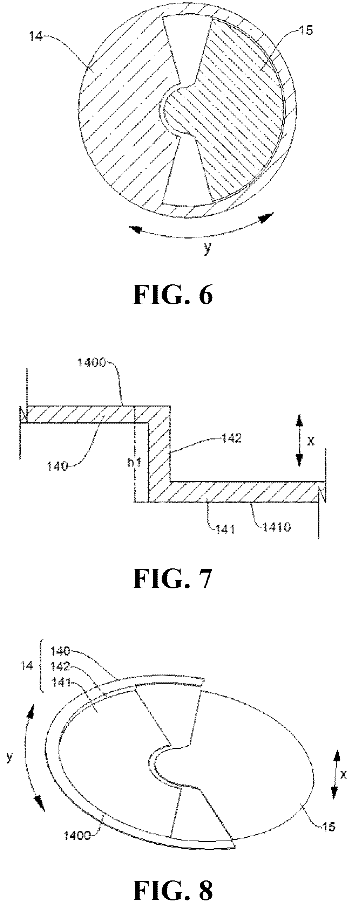

According to some embodiments of the present application, a battery cell 10 is provided. Referring to FIG. 3 to FIG. 6, FIG. 3 is an exploded view of a battery cell 10 according to some embodiments of the present application; FIG. 4 is an exploded three-dimensional view of a battery cell 10 according to some embodiments of the present application; FIG. 5 is a schematic view of a first adapter 14 and a second adapter 15 according to some embodiments of the present application; and FIG. 6 is a schematic view of an orthographic projection of a first adapter 14 and an orthographic projection of a second adapter 15 according to some embodiments of the present application.

The battery cell 10 includes a shell 11, an electrode terminal 12, an electrode assembly 13, a first adapter 14, and a second adapter 15. The shell 11 has a first wall 110. The electrode terminal 12 is mounted on the first wall 110 in an insulated manner. The electrode assembly 13 is accommodated in the shell 11, and the electrode assembly 13 includes a main body part 130, a first tab 131, and a second tab 132. The first tab 131 and the second tab 132 have opposite polarities. In a thickness direction x of the first wall, the first tab 131 and the second tab 132 are both arranged at one end of the main body part 130 facing the first wall 110. The first adapter 14 connects the first wall 110 and the first tab 131. The second adapter 15 connects the electrode terminal 12 and the second tab 132. In the thickness direction x of the first wall, an orthographic projection of the first adapter 14 does not overlap an orthographic projection of the second adapter 15.

The shell 11 is a component configured to accommodate the electrode assembly 13, and the shell 11 may also be configured to accommodate an electrolyte, such as electrolyte solution. Referring to FIG. 4, in some embodiments, the shell 11 includes a case 111 and an end cover. The case 111 is provided with an accommodating cavity therein, and the accommodating cavity is configured to accommodate the electrode assembly 13. The case 111 has an opening in communication with the accommodating cavity. The end cover covers the opening of the case 111 and forms a sealed connection, so as to form a sealed space for accommodating the electrode assembly 13 and the electrolyte. Optionally, the shell 11 may further include a bottom plate 112. Openings are formed at both ends of the case 111, one of the openings is closed by the end cover, and the other opening is closed by the bottom plate 112.

In some embodiments, the material of the shell 11 may be metal or a combination of metal and non-metal. For example, the shell 11 may be made of metal, such as aluminum, copper, iron, aluminum, steel or aluminum alloy. For another example, part of the shell 11 may be made of metal, and the rest may be made of non-metal, for example, the end cover of the shell 11 may be made of metal, and the case 111 or other parts of the shell 11 may be made of non-metallic materials.

In some embodiments, when the battery cell 10 is assembled, the electrode assembly 13 may be placed in the case 111 first, the case 111 is filled with the electrolyte solution, and then the opening of the case 111 is covered by the end cover, so as to complete the assembling of the battery cell 10. Alternatively, in some embodiments, when the battery cell 10 is assembled, the electrode assembly 13 may be placed in the case 111 first, the opening of the case 111 is covered by the end cover, the case 111 is filled with the electrolyte solution through an injection hole on the end cover or on another portion of the shell 11, and then the injection hole is closed to complete the assembling of the battery cell 10.

The shell 11 may have a variety of shapes, such as a cylindrical or prismatic structure. The shape of the shell 11 may be determined according to the specific shape of the electrode assembly 13. For example, if the electrode assembly 13 is of a cylindrical structure, the shell 11 of a cylindrical structure may be selected.

The first wall 110 is a partial structure of the shell 11. The first wall 110 may be provided with an electrode terminal 12 mounted in an insulated manner. The electrode terminal 12 is configured to be electrically connected to a second tab 132 of the electrode assembly 13. The first wall 110 may be electrically connected to the first tab 131. The first wall 110 may be made of a conductive material, such as a metal material. For example, the first wall 110 is made of materials such as aluminum, copper, iron, aluminum, steel, or aluminum alloy. In some embodiments, the first wall 110 may be an end cover of the shell 11, and the case 111 of the shell 11 is arranged around an edge of the first wall 110.

In some embodiments, the first wall 110 may be connected to the case 111 by welding, bonding, clamping, or other connection methods. In some embodiments, the first wall 110 and the case 111 may be integrally formed.

The electrode terminal 12 is a component mounted on the first wall 110 in an insulated manner. The electrode terminal 12 is configured to be connected to the second tab 132 through the second adapter 15, so that a current flows into or out of the second tab 132 through the electrode terminal 12. In some embodiments, the electrode terminal 12 may be of a cylindrical structure or a polygonal prismatic structure. In some embodiments, the electrode terminal 12 is made of a metal material, such as aluminum, copper, iron, aluminum, steel, an alloy, or a composite metal.

In some embodiments, the electrode terminal 12 may be mounted on the first wall 110 through an insulating structure.

It should be noted that, the electrode assembly 13 is a component of the battery cell 10 where an electrochemical reaction occurs. The structure of the electrode assembly 13 may be varied. For example, the electrode assembly 13 may be a wound structure formed by winding a positive electrode plate, a spacer, and a negative electrode plate, and a main body part 130 of the electrode assembly 13 is cylindrical. For example, the spacer is a separator, and the main material of the separator may be selected from at least one of glass fiber, non-woven fabric, polyethylene, polypropylene, and polyvinylidene fluoride.

The main body part 130 is a region where the electrode assembly 13 undergoes chemical reactions within the battery cell 10. The main body part 130 is a structure formed by winding a region of the positive electrode plate coated with a positive electrode active material layer, the spacer, and a region of the negative electrode plate coated with a negative electrode active material layer. It mainly works relying on metal ions moving between the positive electrode plate and the negative electrode plate having opposite polarities. In some embodiments, the thickness direction x of the first wall may be parallel to a height direction of the electrode assembly 13.

The first tab 131 and the second tab 132 are both arranged at one end of the main body part 130 facing the first wall 110. In other words, the first tab 131 and the second tab 132 are arranged at the same end of the main body part 130 in the thickness direction x of the first wall and are located at one end of the main body part 130 facing the first wall 110. The first tab 131 and the second tab 132 are configured to output or input the positive and negative electrodes of the electrode assembly 13, respectively. If the first tab 131 is configured to input or output the positive electrode of the electrode assembly 13, and the first tab 131 is a component formed by mutually stacking and connecting the regions on the positive electrode plate that are not coated with the positive electrode active material layer. Correspondingly, the second tab 132 is configured to output or input the negative electrode of the electrode assembly 13, and the second tab 132 is a component formed by mutually stacking and connecting the regions on the negative electrode plate that are not coated with the negative electrode active material layer. If the first tab 131 is configured to output or input the negative electrode of the electrode assembly 13, the first tab 131 is a component formed by mutually stacking and connecting the regions on the negative electrode plate that are not coated with the negative electrode active material layer. Correspondingly, the second tab 132 is configured to input or output the positive electrode of the electrode assembly 13, and the second tab 132 is a component formed by mutually stacking and connecting the regions on the positive electrode plate that are not coated with the positive electrode active material layer. For example, in the embodiment of the present application, the first tab 131 is configured to output or input the negative electrode of the electrode assembly 13, and the second tab 132 is configured to output or input the positive electrode of the electrode assembly 13.

The first adapter 14 is a component arranged between the first tab 131 and the first wall 110, and the electrical connection between the first tab 131 and the first wall 110 is capable of being achieved through the first adapter 14. The first adapter 14 is made of a conductive material. For example, the material of the first adapter 14 may be copper, iron, aluminum, steel, stainless steel, nickel steel, aluminum alloy, or the like. The connection relationship between the first adapter 14 and the first tab 131 includes, but is not limited to, welding, bonding, clamping, or other connection relationships such as connection through other connecting members. The connection relationship between the first adapter 14 and the first wall 110 includes, but is not limited to, welding, bonding, clamping, or other connection relationships such as connection through other connecting members.

The second adapter 15 is a component arranged between the second tab 132 and the electrode terminal 12, and the electrical connection between the second tab 132 and the electrode terminal 12 is capable of being achieved through the first adapter 14. The second adapter 15 is made of a conductive material. For example, the material of the second adapter 15 may be copper, iron, aluminum, steel, stainless steel, nickel steel, aluminum alloy, or the like. The connection relationship between the second adapter 15 and the second tab 132 includes, but is not limited to, welding, bonding, clamping, or other connection relationships such as connection through other connecting members. The connection relationship between the second adapter 15 and the electrode terminal 12 includes, but is not limited to, welding, bonding, clamping, or other connection relationships such as connection through other connecting members.

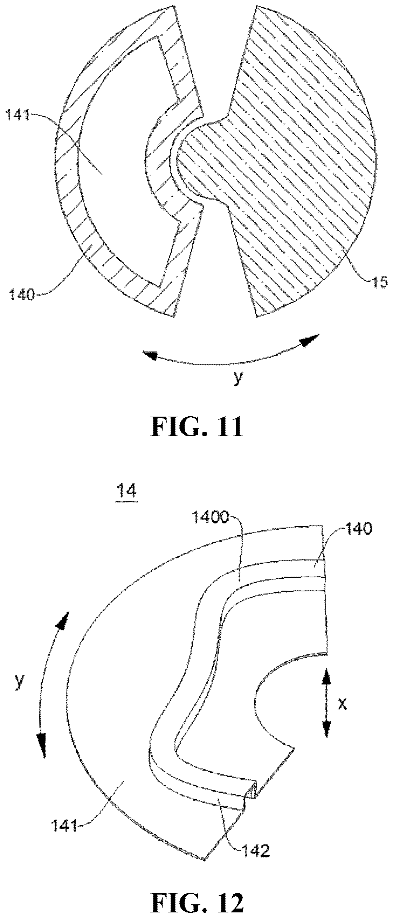

"In the thickness direction x of the first wall, an orthographic projection of the first adapter 14 does not overlap an orthographic projection of the second adapter 15" may refer to that in the thickness direction x of the first wall, the orthographic projection of the first adapter 14 and the orthographic projection of the second adapter 15 do not have portions overlapping each other. In some embodiments, referring to FIG. 6, the orthographic projection of the first adapter 14 may surround the orthographic projection of the second adapter 15, but the two do not have portions overlapping each other. Referring to FIG. 11, the orthographic projection of the first adapter 14 and the second adapter 15 are arranged at an interval from each other. It can be seen in FIG. 11 that the orthographic projection of the first adapter 14 has a recessed region, the orthographic projection of the second adapter 15 has a protruding region, and the protruding region may extend into the recessed region and is arranged at an interval from the orthographic projection of the first adapter 14.

In the above technical solution, by arranging the first tab 131 and the second tab 132 of the electrode assembly 13 on the same end face of the main body part 130, it is conducive to saving space occupied by the electrode assembly 13 in a direction from the electrode assembly 13 to the first wall 110, so as to improve the energy density of the battery cell 10 having such an electrode assembly 13. In the thickness direction x of the first wall, by setting the orthographic projection of the first adapter 14 to not overlap the orthographic projection of the second adapter 15, the risk of internal short circuit of the battery cell 10 caused by the first adapter 14 and the second adapter 15 overlapping each other is capable of being reduced, so that the battery 100 has high reliability.

According to some embodiments of the present application, the first adapter 14 includes a first connecting portion 140 and a second connecting portion 141, the first connecting portion 140 is connected to the first wall 110, and the second connecting portion 141 is connected to the first tab 131. In the thickness direction x of the first wall, an orthographic projection of the first connecting portion 140 does not overlap an orthographic projection of the second tab 132.

The first connecting portion 140 is a component of the first adapter 14 configured to be connected to the first wall 110. In a direction from the electrode assembly 13 to the first wall 110, the first connecting portion 140 protrudes from the second connecting portion 141. In some embodiments, the first connecting portion 140 has a first surface 1400 facing the first wall 110, and the first connecting portion 140 may be connected to the first wall 110 through the first surface 1400. In other embodiments, the first connecting portion 140 may also be connected to the first wall 110 through another portion. In some embodiments, the first connecting portion 140 may be in a sheet shape, a block shape, or other shapes. In some embodiments, in the thickness direction x of the first wall, the shape of the orthographic projection of the first connecting portion 140 may be a ring shape, an arc shape, a serpentine shape, or the like.

The second connecting portion 141 is a component of the first adapter 14 configured to be connected to the first tab 131. In some embodiments, the second connecting portion 141 has a second surface 1410 facing the electrode assembly 13, and the second connecting portion 141 may be connected to the first tab 131 through the second surface 1410. In other embodiments, the second connecting portion 141 may also be connected to the first tab 131 through another portion. In some embodiments, the second connecting portion 141 may be in a sheet shape, a block shape, or other shapes. In some embodiments, in the thickness direction x of the first wall, the shape of the orthographic projection of the second connecting portion 141 may be a sector shape, a ring shape, an arc shape, a serpentine shape, or the like. The material of the second connecting portion 141 may be the same as that of the first tab 131.

In some embodiments, the material of the first connecting portion 140 may be the same as or different from the material of the second connecting portion 141. The first connecting portion 140 and the second connecting portion 141 may be separate structures. For example, the first connecting portion 140 is connected to the second connecting portion 141 by welding, bonding, clamping, or other connection relationships such as connection through other connecting members. The first connecting portion 140 and the second connecting portion 141 may also be an integrated structure. For example, the first connecting portion 140 is obtained by stamping the second connecting portion 141 by using a stamping process, or the first connecting portion 140 and the second connecting portion 141 are obtained by integral casting.

In the electrode assembly 13, the first tab 131 and the second tab 132 may be arranged at an interval to reduce the risk of short circuit between the positive and negative electrodes in the battery cell 10. The second adapter 15 is a component arranged between the second tab 132 and the first wall 110. In some embodiments, the orthographic projection of the second adapter 15 in the thickness direction x of the first wall is arranged at an interval from the orthographic projection of the first tab 131.

"In the thickness direction x of the first wall, the orthographic projection of the first connecting portion 140 does not overlap the orthographic projection of the second tab 132" may refer to that, in the thickness direction x of the first wall, the orthographic projection of the first connecting portion 140 and the orthographic projection of the second tab 132 do not have portions overlapping each other, and the two may be arranged at an interval from each other. Alternatively, as shown in FIG. 5 and FIG. 6, the first connecting portion 140 is ring shaped, and the second adapter 15, that is, the second electrode plate, is located within the region enclosed by the first connecting portion 140, but there is no portions in contact with each other between the first connecting portion 140 and the second electrode plate and/or the second adapter 15.

In the above technical solution, by providing the first connecting portion 140 connected to the first wall 110 and the second connecting portion 141 connected to the first tab 131, it is capable of facilitating an electrical connection between the first wall 110 and the first tab 131, thereby reducing the risk of internal open circuit in the battery cell 10 due to failure of the connection between the first adapter 14 and the first tab 131 or failure of the connection between the first adapter 14 and the first wall 110. In the thickness direction x of the first wall, by setting the orthographic projection of the first connecting portion 140 to not overlap the orthographic projection of the second tab 132, the first connecting portion 140 does not occupy space between the second tab 132 and the first wall 110, which is capable of effectively reducing the risk of internal short circuit of the battery cell 10 caused by the first adapter 14 and the second adapter 15 overlapping each other, so that the battery 100 has high reliability.

according to some embodiments of the present application, referring to FIG. 7, FIG. 7 is a schematic view of interior of a local structure of a first adapter 14 according to some embodiments of the present application.

The first connecting portion 140 has a first surface 1400 in contact with the first wall 110, and the second connecting portion 141 has a second surface 1410 in contact with the first tab 131. In the thickness direction x of the first wall, there is a height difference h1 between the first surface 1400 and the second surface 1410, meeting h1≤3 mm.

In the thickness direction x of the first wall, the first tab 131 is arranged to be arranged at an interval from the first wall 110, and the first connecting portion 140 protrudes from the second connecting portion 141 in the direction from the electrode assembly 13 to the first wall 110.

In the thickness direction x of the first wall, the first surface 1400 of the first connecting portion 140 may face the first wall 110, and the first surface 1400 is in contact with the first wall 110 to be electrically connected to the first wall 110. In the thickness direction x of the first wall, the second surface 1410 of the second connecting portion 141 may face the first tab 131, and the second surface 1410 is in contact with the first tab 131 to be electrically connected to the first tab 131.

In some embodiments, a surface area of the second surface 1410 may be equal to a surface area of the first tab 131 corresponding to the second surface 1410. For example, the surface area of the second surface 1410 may be less than or equal to the surface area of the first tab 131.

In the thickness direction x of the first wall, there is the height difference h1 between the first surface 1400 and the second surface 1410, and a value of h1 may be less than or equal to 3 mm, for example, h1 may be 3 mm, 2 mm, 1 mm, or a smaller value.

In the above technical solution, by setting the height difference h1 between the first surface 1400 and the second surface 1410 to be less than or equal to 3 mm, on the one hand, the first surface 1400 of the first connecting portion 140 is capable of being connected to the first wall 110 to achieve stable transmission of a current between the first tab 131 and the first wall 110. On the other hand, it is capable of reducing the risk of damage to the first wall 110, the first adapter 14, or the first tab 131 due to compression as the first adapter 14 is too thick and interferes with the first wall 110, and therefore, the reliability of the battery 100 is improved.

In other embodiments, the height difference h1 between the first surface 1400 and the second surface 1410 may be less than or equal to 7 mm, for example, h1 may be 7 mm, 6 mm, 5 mm, 4 mm, or a smaller value.

In other embodiments, the height difference h1 between the first surface 1400 and the second surface 1410 may be greater than 3 mm, for example, h1 may be 4 mm, 5 mm, 6 mm, or a greater value.

According to some embodiments of the present application, a cross-sectional area of the main body part 130 is S, an area of the first surface 1400 is S1, and an area of the second surface 1410 is S2, meeting S1+S2≤S/2.

The cross-sectional area of the main body part 130 is S on a plane perpendicular to the thickness direction x of the first wall, or in other words, on a plane perpendicular to an axial direction of the main body part 130. In some embodiments, the cross-sectional area S of the main body part 130 may be equal to a surface area of an end face of the main body part 130 provided with the first tab 131 and the second tab 132. The end face of the main body part 130 provided with the first tab 131 and the second tab 132 may be a first end face.

In some embodiments, in the thickness direction x of the first wall, the orthographic projection of the first connecting portion 140 does not overlap the orthographic projection of the second connecting portion 141, an area of the first connecting portion 140 projected onto the first end face may be S1, an area of the second connecting portion 141 projected onto the first end face may be S2, an area of the first end face may be S, a sum of S1 and S2 may be less than or equal to half of S. For example, a value of S1+S2 may be S/2, S/3, S/4, or smaller.

"S1+S2≤S/2" may also be understood as that the first adapter 14 occupies at most half of the area of the first end face, and the second adapter 15 may be arranged on the portion of the first end face not occupied by the first adapter 14.

In the above technical solution, by setting the sum of the area S1 of the first surface 1400 and the area S2 of the second surface 1410 to be no greater than half of the cross-sectional area S of the main body part 130, on the one hand, large contact areas are capable of being provided between the first adapter 14 and the first tab 131 and between the first adapter 14 and the first wall 110, so that the current can be stably transmitted between the first tab 131 and the first wall 110. On the other hand, it is capable of reducing the risk of affecting the positive and negative current output and input performance of the battery cell 10 due to the excessively small contact surface between the second adapter 15 and the second tab 132 or contact area between the second adapter 15 and the electrode terminal 12 as the first adapter 14 occupying an excessively large area, and therefore, the battery 100 has strong performance.

According to some embodiments of the present application, referring to FIG. 5 and FIG. 7, the first adapter 14 further includes a transition portion 142, and the transition portion 142 extends from an edge of the second connecting portion 141 in a direction approaching the first wall 110, and the transition portion 142 connects the first connecting portion 140 and the second connecting portion 141.

The transition portion 142 is a component that connects the first connecting portion 140 and the second connecting portion 141. In some embodiments, the transition portion 142 may be in a sheet shape, a plate shape, or a block shape. In some embodiments, in the thickness direction x of the first wall, one end of the transition portion 142 may be connected to the first connecting portion 140, and the transition portion 142 may be connected to the second connecting portion 141. The portion where the transition portion 142 and the first connecting portion 140 are connected to each other may be an edge of the first connecting portion 140. The portion where the transition portion 142 and the second connecting portion 141 are connected to each other may be an edge of the second connecting portion 141.

In some embodiments, the portion where the transition portion 142 and the first connecting portion 140 are connected to each other may be a non-edge portion of the first connecting portion 140. The portion where the transition portion 142 and the second connecting portion 141 are connected to each other may be a non-edge portion of the second connecting portion 141.

In the above technical solution, by setting the transition portion 142, on the one hand, the first connecting portion 140 and the second connecting portion 141 are capable of being effectively connected, so that the first adapter 14 can effectively and stably connect the first wall 110 and the first tab 131, thereby reducing the risk of open circuit between the first wall 110 and the first tab 131, and therefore, the battery 100 has high reliability. On the other hand, by setting the transition portion 142 to extend from the edge of the second connecting portion 141, the space between the electrode assembly 13 and the first wall 110 is capable of being reasonably utilized, and the contact areas between the first adapter 14 and the first wall 110 and between the first adapter 14 and the first tab 131 can be increased, which is capable of effectively improving the current flow capacity between the first tab 131 and the first wall 110, thereby being conducive to improving the performance of the battery 100.

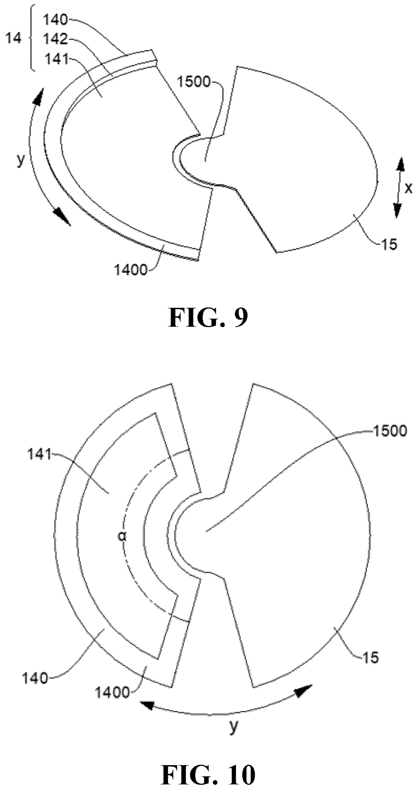

According to some embodiments of the present application, referring to FIG. 8 and FIG. 9, FIG. 8 is a schematic view of a first adapter 14 and a second adapter 15 according to some embodiments of the present application, and FIG. 9 is a schematic view of a first adapter 14 and a second adapter 15 according to some embodiments of the present application.

In the thickness direction x of the first wall, the orthographic projection of the first connecting portion 140 is arc-shaped.

In some embodiments, the first connecting portion 140 may extend in an arc-shaped trajectory, so that the orthographic projection of the first connecting portion 140 in the thickness direction x of the first wall is arc-shaped.

To deepen the understanding of the arc-shaped orthographic projection of the first connecting portion 140, the first adapters 14 shown in FIG. 5 and FIG. 6 are compared. In FIG. 5 and FIG. 6, the first connecting member includes the first connecting portion 140, the second connecting portion 141 and the transition portion 142. The second connecting portion 141 may extend in an arc-shaped trajectory. The second connecting portion 141 is sector-shaped. The transition portion 142 extends from an outer arc edge of the second connecting portion 141 toward the direction of the first wall 110. In the extension direction of the second connecting portion 141, the size of the transition portion 142 is equal to the size of the outer arc of the second connecting portion 141. The first connecting portion 140 is in a circular ring shape, and an end portion of the transition portion 142 away from the second connecting portion 141 is connected to a portion of an inner ring edge of the first connecting portion 140. In FIG. 5 and FIG. 6, in the thickness direction x of the first wall, the orthographic projection of the first connecting portion 140 is ring-shaped. In FIG. 5 and FIG. 6, part of the first connecting portion 140 surrounds the second adapter 15, that is, part of the first connecting portion 140 is located at the periphery of the second adapter 15.

Referring to FIG. 8, FIG. 8 provides a solution in which the orthographic projection of the first connecting portion 140 is arc-shaped. Comparing FIG. 5 with FIG. 8, the first connecting portion 140 in FIG. 8 is changed on the basis of the first connecting portion 140 in FIG. 5, and a scope of the change may include cutting off the part of the first connecting portion 140 that surrounds the second adapter 15 in FIG. 5, and the first connecting portion 140 is changed from a ring shape to an arc shape. In the extension direction of the first connecting portion 140, the two ends of the first connecting portion 140 that are far away from each other are adjacent to the second adapter 15 and are arranged at an interval from the second adapter 15.

Referring to FIG. 9, FIG. 9 provides a solution in which the orthographic projection of the first connecting portion 140 is arc-shaped. Comparing FIG. 9 with FIG. 8, the first connecting portion 140 in FIG. 9 is changed on the basis of the first connecting portion 140 in FIG. 8, and the scope of the change may include further cutting off the part of the first adapter 14 adjacent to the second adapter 15, and in the extension direction of the first connecting portion 140, the two ends of the first connecting portion 140 that are far away from each other are as far away from the second adapter 15 as possible, and end faces of the two ends of the first connecting portion 140 that are far away from each other may be flush with the end face of the second connecting portion 141.

In the above technical solution, in the thickness direction x of the first wall, by setting the orthographic projection of the first connecting portion 140 to be arc-shaped, on the one hand, when the battery cell 10 is a cylindrical battery cell 10, it is capable of being reasonably conducive to the space between the electrode assembly 13 and the first wall 110, so that there is a large electrical connection area between the first tab 131 and the first wall 110. On the other hand, compared with the solution in which the first connecting portion 140 is ring-shaped and arranged in a circle around an outer circumference of the first wall 110, it is capable of effectively reducing the risk of internal short circuit in the battery cell 10 caused by the first adapter 14 and the second adapter 15 overlapping each other, and therefore, the battery 100 has high reliability.

According to some embodiments of the present application, referring to FIG. 10 and FIG. 11, FIG. 10 is a schematic view of a first adapter 14 and a second adapter 15 according to some embodiments of the present application, and FIG. 11 is a schematic view of an orthographic projection of a first adapter 14 and an orthographic projection of a second adapter 15 according to some embodiments of the present application. In FIG. 11, the orthographic projection of the second connecting portion 141 is not filled with a pattern, but is a blank region to be distinguished from the orthographic projection of the first connecting portion 140.

In the thickness direction x of the first wall, the orthographic projection of the first connecting portion 140 is ring-shaped, the orthographic projection of the first connecting portion 140 surrounds the orthographic projection of the second connecting portion 141, and the orthographic projection of the second adapter 15 is located outside the orthographic projection of the first connecting portion 140.

The first connecting portion 140 may extend in a ring-shaped trajectory, so that the orthographic projection of the first connecting portion 140 in the thickness direction x of the first wall is ring-shaped.

"In the thickness direction x of the first wall, the orthographic projection of the first connecting portion 140 is ring-shaped" may refer to that the first connecting portion 140 may be strip-shaped, and the first connecting portion 140 may be strip-shaped connected end to end. The orthographic projection of the first connecting portion 140 in the thickness direction x of the first wall may be a square ring, a central ring, a sector ring, or other ring shapes with a blank region in the middle.

In some embodiments, the first connecting portion 140 may extend along an outer edge of the second connecting portion 141 so that the orthographic projection of the first connecting portion 140 in the thickness direction x of the first wall surrounds the orthographic projection of the second connecting portion 141.

"The orthographic projection of the second adapter 15 is outside the orthographic projection of the first connecting portion 140" may refer to that the first adapter 14 and the second adapter 15 are independent of each other and are separated from each other without interfering with each other in any direction.

In the above technical solution, in the thickness direction x of the first wall, by setting the orthographic projection of the first connecting portion 140 to be ring-shaped and surround the orthographic projection of the second connecting portion 141, a contact connection between the first connecting portion 140 and the first wall 110 is capable of being improved, which is conducive to improving the current flow capacity between the first tab 131 and the first wall 110. By setting the orthographic projection of the second adapter 15 to be located outside the orthographic projection of the first connecting portion 140, the risk of internal short circuit of the battery cell 10 caused by the first adapter 14 and the second adapter 15 overlapping each other is capable of being effectively reduced, so that the battery 100 has high reliability.

In other embodiments, referring to FIG. 12, FIG. 12 is a schematic view of a first adapter 14 according to other embodiments of the present application. The first adapter 14 includes a first connecting portion 140, a second connecting portion 141, and a transition portion 142. The first connecting portion 140 protrudes from the second connecting portion 141. The first connecting portion 140 is connected to the second connecting portion 141 through the transition portion 142. The first connecting portion 140 is strip-shaped and the first connecting portion 140 extends in a serpentine trajectory in a meandering shape.

According to some embodiments of the present application, referring to FIG. 10, in a peripheral direction of the electrode assembly 13, a central angle corresponding to the first connecting portion 140 is α, meeting 0<α≤180°.

The electrode assembly 13 may be a wound electrode assembly 13. The electrode assembly 13 may be a cylindrical structure, and a peripheral direction of the electrode assembly 13 may be a circumferential direction of the electrode assembly 13.

The central angle α corresponding to the first connecting portion 140 may be understood as follows: in the peripheral direction of the electrode assembly 13, the first connecting portion 140 has two edges that are away from each other, and the angle between straight lines where the two edges are located is α. The central angle α corresponding to the first connecting portion 140 may also be understood as follows: the first connecting portion 140 may be sector-shaped, and the center of a circle corresponding to the first connecting portion 140 is located on an axis of the electrode assembly 13.

In some embodiments, the central angle α corresponding to the first connecting portion 140 may be less than or equal to 180°. For example, α may be 180°, 179°, 178°, 177° ... 130°, 129°, 128° ... 120°, 119° ... 90°, 89°, 88°, or smaller.

In the above technical solution, by setting the central angle α corresponding to the first connecting portion 140 to be less than or equal to 180°, on the one hand, the first connecting portion 140 is capable of being caused to not occupy too much space between the electrode assembly 13 and the first wall 110, so that there is a large connection area between the second adapter 15 and the electrode terminal 12 and between the second adapter and the second tab 132, and therefore, the battery 100 has strong performance. On the other hand, the first connecting portion 140 is capable of being kept away from the second adapter 15, thereby reducing the risk of internal short circuit of the battery cell 10 caused by the first connecting portion 140 and the second adapter 15 overlapping each other, so that the battery 100 has high reliability.

In other embodiments, in the peripheral direction of the electrode assembly 13, the central angle α corresponding to the first connecting portion 140 may also be greater than 180°.

According to some embodiments of the present application, 0<α≤120° is met.

The central angle α corresponding to the first connecting portion 140 may be less than or equal to 120°. For example, α may be 120°, 119°, 118°, 117° ... 90°, 89°, 88° ... 45°, 44° ... 30°, 29°, 28°, or smaller.

According to some embodiments of the present application, referring to FIG. 5, the second adapter 15 includes a third connecting portion 150 and a fourth connecting portion 151, the third connecting portion 150 is connected to the electrode terminal 12, and the fourth connecting portion 151 is connected to the second tab 132. In the thickness direction x of the first wall, an orthographic projection of the third connecting portion 150 does not overlap an orthographic projection of the fourth connecting portion 151.

The third connecting portion 150 is a portion where the second adapter 15 is connected to the electrode terminal 12, and the fourth connecting portion 151 is a portion where the second adapter 15 is connected to the second tab 132.

In some embodiments, the second connecting member may be plate-shaped, the third connecting portion 150 and the fourth connecting portion 151 are connected to each other, a surface of the third connecting portion 150 facing the first wall 110 and a surface of the fourth connecting portion 151 facing the first wall 110 may be flush with each other, and a surface of the third connecting portion 150 facing the second tab 132 and a surface of the fourth connecting portion 151 facing the second tab 132 may be flush with each other.

In some embodiments, the third connecting portion 150 and the fourth connecting portion 151 are connected to each other, the surface of the third connecting portion 150 facing the first wall 110 may be protruded as compared with the surface of the fourth connecting portion 151 facing the first wall 110, and the surface of the third connecting portion 150 facing the second tab 132 may be protruded as compared with the surface of the fourth connecting portion 151 facing the second tab 132.

"In the thickness direction x of the first wall, the orthographic projection of the third connecting portion 150 does not overlap the orthographic projection of the fourth connecting portion 151" may be understood as that in the thickness direction x of the first wall, the orthographic projection of the portion where the second adapter 15 and the electrode terminal 12 are connected to each other does not overlap the orthographic projection of the portion where the second adapter 15 and the second tab 132 are connected to each other.

In the above technical solution, the electrode terminal 12 and the second tab 132 are respectively connected by the third connecting portion 150 and the fourth connecting portion 151, which is capable of effectively improving the connection stability between the second tab 132 and the electrode terminal 12, reducing the risk of open circuit between the second tab 132 and the electrode terminal 12, and improving the reliability of the battery 100. In the thickness direction x of the first wall, by setting the orthographic projection of the third connecting portion 150 to not overlap the orthographic projection of the fourth connecting portion 151, the second adapter 15 is capable of being respectively connected to the electrode terminal 12 and the second tab 132 at different portions, thereby reducing the difficulty of assembling the second adapter 15, improving the manufacturing efficiency of the battery cell 10, and further improving the manufacturing efficiency of the battery 100.

In other embodiments, in the thickness direction x of the first wall, the orthographic projection of the third connecting portion 150 may fall within the orthographic projection of the fourth connecting portion 151. For example, the electrode terminal 12 is located directly above the second tab 132.

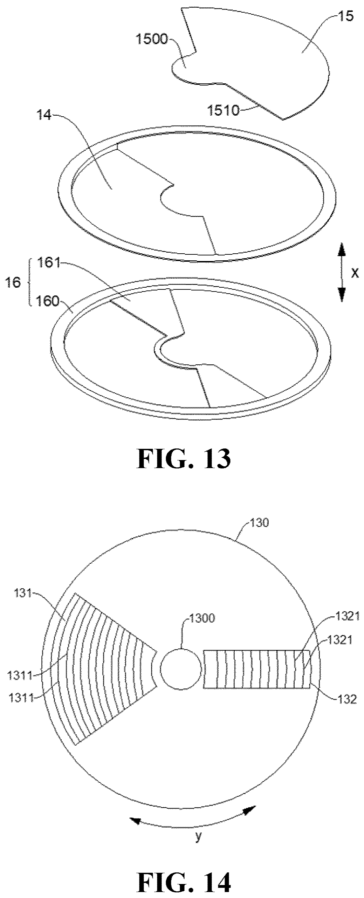

According to some embodiments of the present application, the third connecting portion 150 has a third surface 1500 in contact with the electrode terminal 12, and the fourth connecting portion 151 has a fourth surface 1510 in contact with the second tab 132 (see FIG. 13). In the thickness direction x of the first wall, there is a height difference h2 (not shown) between the third surface 1500 and the fourth surface 1510, meeting h2≤3 mm.

The third surface 1500 is a portion where the third connecting portion 150 and the electrode terminal 12 are in contact with each other. In some embodiments, the third surface 1500 may be a surface of the third connecting portion 150 facing the first wall 110. The fourth surface 1510 is a portion where the fourth connecting portion 151 and the second tab 132 are in contact with each other. In some embodiments, the fourth surface 1510 may be a surface of the fourth connecting portion 151 facing the second tab 132.

In some embodiments, in the thickness direction x of the first wall, there is a distance between the second tab 132 and the electrode terminal 12, and the second adapter 15 is arranged to connect the second tab 132 and the electrode terminal 12. In the thickness direction x of the first wall, the height difference h2 between the third surface 1500 and the fourth surface 1510 may correspond to the distance between the second tab 132 and the electrode terminal 12.

h2 may be a value less than or equal to 3 mm. For example, h2 may be 3 mm, 2.5 mm, 2 mm, or a smaller value.

In the above technical solution, by setting the height difference h2 between the third surface 1500 and the fourth surface 1510 to be less than or equal to 3 mm, on the one hand, the third surface 1500 of the third connecting portion 150 is capable of being connected to the electrode terminal 12 to achieve stable transmission of a current between the second tab 132 and the electrode terminal 12. On the other hand, it is capable of reducing the risk of damage to the electrode terminal 12, the second adapter 15, or the second tab 132 due to compression as the second adapter 15 is too thick and interferes with the electrode terminal 12, and therefore, the reliability of the battery 100 is improved.

According to some embodiments of the present application, a cross-sectional area of the main body part 130 is S, an area of the third surface 1500 is S3, and an area of the fourth surface 1510 is S4, meeting S3+S4≤S/2.

The cross-sectional area of the main body part 130 is S on a plane perpendicular to the thickness direction x of the first wall, or in other words, on a plane perpendicular to an axial direction of the main body part 130. In some embodiments, the cross-sectional area S of the main body part 130 may be equal to a surface area of an end face of the main body part 130 provided with the first tab 131 and the second tab 132. The end face of the main body part 130 provided with the first tab 131 and the second tab 132 may be a first end face.

In some embodiments, in the thickness direction x of the first wall, the orthographic projection of the third surface 1500 may not overlap the orthographic projection of the fourth surface 1510, an area of the third surface 1500 projected to the first end face may be S3, an area of the fourth surface 1510 projected to the first end face may be S4, an area of the first end face may be S, and a sum of S3 and S4 may be less than or equal to S/2. For example, S3+S4 may be S/2, S/3, S/4, or another value.

In the above technical solution, by setting the sum of the area S3 of the third surface 1500 and the area S4 of the fourth surface 1510 to be no greater than half of the cross-sectional area S of the main body part 130, on the one hand, large contact areas are capable of being provided between the second adapter 15 and the second tab 132 and between the second adapter 15 and the electrode terminal 12, so that the current can be stably transmitted between the second tab 132 and the electrode terminal 12. On the other hand, it is capable of reducing the risk of affecting the positive and negative current output and input performance of the battery cell 10 due to the excessively small contact surface between the first adapter 14 and the first tab 131 or contact area between the first adapter 14 and the first wall 110 as the second adapter 15 occupying an excessively large area, and therefore, the battery 100 has strong performance.

According to some embodiments of the present application, referring to FIG. 4, the electrode assembly 13 is a wound electrode assembly 13, the main body part 130 has a central through hole 1300, the central through hole 1300 penetrates the main body part 130 in an axial direction of the main body part 130, and the third connecting portion 150 covers at least part of the central through hole 1300.

The electrode assembly 13 is a wound electrode assembly 13, and the electrode assembly 13 includes a first electrode plate and a second electrode plate with opposite polarities and a separator. The first electrode plate, the second electrode plate, and the separator are stacked and wound around a winding axis. The central through hole 1300 is a central channel formed after winding of the first electrode plate, the second electrode plate, and the separator. The central through hole 1300 can pass through both ends of the main body part 130 in the thickness direction x of the first wall.

The fourth connecting portion 151 of the second adapter 15 can cover the second tab 132 at the end face of the main body part 130, and the third connecting portion 150 is connected to the fourth connecting portion 151 and extends toward the central through hole 1300 to cover at least part of the central through hole 1300. Correspondingly, the orthographic projection of the electrode terminal 12 in the thickness direction x of the first wall can cover at least part of the central through hole 1300.

In the above technical solution, by setting the third connecting portion 150 to cover at least part of the central through hole 1300, on the one hand, the second adapter 15 can reasonably utilize the space located between the electrode assembly 13 and the first wall 110 and corresponding to the central through hole 1300, so that the second adapter 15 has a large surface area, which is conducive to transmitting the current between the second tab 132 and the electrode terminal 12 and to improving the performance of the battery 100. On the other hand, at least part of the third connecting portion 150 can be kept away from the second tab 132, that is, a connecting portion between the second adapter 15 and the electrode terminal 12 and a connecting portion between the second adapter 15 and the second tab 132 are kept away from each other, thereby reducing the difficulty of assembling the second adapter 15 and improving the manufacturing efficiency of the battery 100.

According to some embodiments of the present application, referring to FIG. 13, FIG. 13 is a schematic view of an insulating member 16, a first adapter 14, and a second adapter 15 according to some embodiments of the present application.

The battery cell 10 further includes the insulating member 16. The insulating member 16 is located between the electrode assembly 13 and the first wall 110. The insulating member 16 insulates and isolates the first adapter 14 from the second adapter 15.

The insulating member 16 is arranged between the electrode assembly 13 and the first wall 110. The insulating member 16 has an insulating characteristic and is capable of insulating and isolating the first adapter 14 from the second adapter 15. In some embodiments, the insulating member 16 may be in a sheet shape, a plate shape, a ring shape, or the like. In some embodiments, the insulating member 16 may be a rubber member, a silicone member, a plastic member, or the like. In some embodiments, the insulating member 16 is made of an insulating material, such as polypropylene, polyethylene, or another material with insulating characteristics. The insulating member 16 may be lower plastic of the battery cell 10.

In the above technical solution, by arranging the insulating member 16 to insulate and isolate the first adapter 14 from the second adapter 15, the risk of internal short circuit of the battery cell 10 caused by the first adapter 14 and the second adapter 15 overlapping each other is capable of being reduced, so that the battery 100 has high reliability.

According to some embodiments of the present application, referring to FIG. 13, the insulating member 16 includes an insulating body 160 and a partitioning portion 161. The insulating body 160 is a ring-shaped structure arranged in the peripheral direction of the electrode assembly 13. The insulating body 160 insulates and isolates the second adapter 15 from the shell 11. The partitioning portion 161 is connected to an inner ring surface of the insulating body 160. The partitioning portion 161 insulates and isolates the first adapter 14 from the second adapter 15.

The insulating body 160 is ring-shaped, and the insulating body 160 may be arranged in the peripheral direction of the electrode assembly 13 and surround the electrode assembly 13. Part of the insulating body 160 may be arranged at the periphery of the second adapter 15 to insulate and isolate the second adapter 15 from the case 111. In the direction from the electrode assembly 13 to the first wall 110, part of the insulating body 160 may extend beyond the second adapter 15 to insulate and isolate the second adapter 15 from the first wall 110.

The insulating body 160 may be arranged between the electrode assembly 13 and the first wall 110, and the first tab 131 and the second tab 132 can support a lower surface of the insulating body 160, or the lower surface of the insulating body 160 can be supported by the end face of the main body part 130. An upper surface of the insulating body 160 faces the first wall 110. The partitioning portion 161 is arranged inside the insulating body 160 to partition the internal space of the insulating body 160 into two sub-spaces, one of the sub-spaces accommodates the first adapter 14 and the other sub-space accommodates the second adapter 15.

In the above technical solution, by arranging the insulating member 16, the risk of internal short circuit of the battery cell 10 caused by overlapping of the first adapter 14 and the second adapter 15 is capable of being effectively reduced, so that the battery 100 has high reliability. The insulating member 16 includes the ring-shaped insulating body 160, which is capable of effectively insulating and isolating the second adapter 15 from the shell 11, thereby effectively reducing the risk of internal short circuit of the battery cell 10 caused by overlapping of the second adapter 15 and the shell 11, so that the battery 100 has high reliability.

According to some embodiments of the present application, the electrode assembly 13 includes a first electrode plate and a second electrode plate, and the electrode assembly 13 is a wound electrode assembly 13. The first electrode plate includes a plurality of first sub-tabs 1311, and the plurality of first sub-tabs 1311 form a first tab 131. The first electrode plate of the innermost n1 turn is not provided with the first sub-tab 1311, and n1≥1. And/or, the second electrode plate includes a plurality of second sub-tabs 1321, and the plurality of second sub-tabs 1321 form a second tab 132. The second electrode plate of the innermost n2 turn is not provided with the second sub-tab 1321, and n2≥1.

The electrode assembly 13 is a wound electrode assembly 13, and the electrode assembly 13 includes a first electrode plate and a second electrode plate with opposite polarities and a separator. The first electrode plate, the second electrode plate, and the separator are stacked and wound around a winding axis. Moreover, a central through hole 1300 passing through the main body part 130 is formed in the center of the main body part 130.

In some embodiments, the wound electrode assembly 13 includes a plurality of turns of the first electrode plates, and the first tab 131 includes a plurality of first sub-tabs 1311. The number of the first sub-tabs 1311 may be less than the number of turns of the first electrode plates. For example, the first electrode plate of the innermost n1 turn is not provided with the first sub-tab 1311, such as the first electrode plates of the innermost first and second turns are not provided with the first sub-tabs 1311, so that there is a certain distance between the first tab 131 and the central through hole 1300. The value of n1 may be 1 or an integer greater than 1, for example, the first electrode plate(s) of the innermost turn, the innermost 2 turns, the innermost 3 turns, the innermost 4 turns, or the innermost more turns is(are) not provided with the first sub-tab(s) 1311. Referring to FIG. 14, and FIG. 14 is a top view of an electrode assembly 13 according to some embodiments of the present application. There is a certain distance between an edge of the first tab 131 closest to the central through hole 1300 and the central through hole 1300.

In some embodiments, the wound electrode assembly 13 includes a plurality of turns of the second electrode plates, and the second tab 132 includes a plurality of second sub-tabs 1321. The number of the second sub-tabs 1321 may be less than the number of turns of the second electrode plates. For example, the second electrode plate of the innermost n2 turn is not provided with the second sub-tab 1321, such as the second electrode plates of the innermost first and second turns are not provided with the second sub-tabs 1321, so that there is a certain distance between the second tab 132 and the central through hole 1300. The value of n2 may be 1 or an integer greater than 1, for example, the second electrode plate(s) of the innermost turn, the innermost 2 turns, the innermost 3 turns, the innermost 4 turns, or the innermost more turns is(are) not provided with the second sub-tab(s) 1321. Referring to FIG. 14, there is a certain distance between an edge of the second tab 132 closest to the central through hole 1300 and the central through hole 1300.

In the above technical solution, by not arranging the first sub-tab 1311 on the first electrode plate of the innermost n1 turn, the first tab 131 and the second tab 132 are capable of being effectively arranged at an interval, thereby reducing the risk of short circuit between the first tab 131 and the second tab 132, which is conducive to improving the reliability of the battery 100. Likewise, by not arranging the second sub-tab 1321 on the second electrode plate of the innermost n2 turn, the second tab 132 and the first tab 131 are capable of being effectively arranged at an interval, thereby reducing the risk of short circuit between the second tab 132 and the first tab 131, which is conducive to improving the reliability of the battery 100.

According to some embodiments of the present application, the electrode assembly 13 includes a first electrode plate and a second electrode plate, and the electrode assembly 13 is a wound electrode assembly 13. The first electrode plate includes a plurality of first sub-tabs 1311, and the plurality of first sub-tabs 1311 form a first tab 131. The first electrode plate of the outermost m1 turn is not provided with the first sub-tab 1311, and m1≥1. And/or, the second electrode plate includes a plurality of second sub-tabs 1321, and the plurality of second sub-tabs 1321 form a second tab 132. The second electrode plate of the outermost m2 turn is not provided with the second sub-tab 1321, and m2≥1.

The electrode assembly 13 is a wound electrode assembly 13, and the electrode assembly 13 includes a first electrode plate and a second electrode plate with opposite polarities and a separator. The first electrode plate, the second electrode plate, and the separator are stacked and wound around a winding axis.

In some embodiments, the wound electrode assembly 13 includes a plurality of turns of the first electrode plates, and the first tab 131 includes a plurality of first sub-tabs 1311. The number of the first sub-tabs 1311 may be less than the number of turns of the first electrode plates. For example, the first electrode plate of the outermost m1 turn is not provided with the first sub-tab 1311, such as the first electrode plates of the outermost first and second turns are not provided with the first sub-tabs 1311, so that there is a certain distance between the first tab 131 and a peripheral surface of the main body part 130. The value of m1 may be 1 or an integer greater than 1, for example, the first electrode plate(s) of the outermost turn, the outermost 2 turns, the outermost 3 turns, the outermost 4 turns, or the outermost more turns is(are) not provided with the first sub-tab(s) 1311. Referring to FIG. 14, there is a certain distance between an edge of the first tab 131 closest to the peripheral surface of the main body part 130 and the peripheral surface of the main body part 130.

In some embodiments, the wound electrode assembly 13 includes a plurality of turns of the second electrode plates, and the second tab 132 includes a plurality of second sub-tabs 1321. The number of the second sub-tabs 1321 may be less than the number of turns of the second electrode plates. For example, the second electrode plate of the outermost m2 turn is not provided with the second sub-tab 1321, such as the second electrode plates of the outermost first and second turns are not provided with the second sub-tabs 1321, so that there is a certain distance between the second tab 132 and the peripheral surface of the main body part 130. The value of m2 may be 1 or an integer greater than 1, for example, the second electrode plate(s) of the outermost turn, the outermost 2 turns, the outermost 3 turns, the outermost 4 turns, or the outermost more turns is(are) not provided with the second sub-tab(s) 1321. Referring to FIG. 14, there is a certain distance between an edge of the second tab 132 closest to the peripheral surface of the main body part 130 and the peripheral surface of the main body part 130.

According to some embodiments of the present application, the electrode assembly 13 is a wound electrode assembly 13, the first tab 131 includes a plurality of first sub-tabs 1311, and each of the first sub-tabs 1311 has the same size in a winding direction of the electrode assembly 13. Alternatively, in a direction from the inner turn to the outer turn of the electrode assembly 13, the sizes of the plurality of first sub-tabs 1311 gradually increase in the winding direction of the electrode assembly 13.

The electrode assembly 13 is a wound electrode assembly 13, and the electrode assembly 13 includes a first electrode plate and a second electrode plate with opposite polarities and a separator. The first electrode plate, the second electrode plate, and the separator are stacked and wound around a winding axis.

The wound electrode assembly 13 includes a plurality of turns of the first electrode plates, and the first tab 131 includes a plurality of first sub-tabs 1311. The number of the first sub-tabs 1311 may be equal to the number of turns of the first electrode plates, or less than the number of turns of the first electrode plates. "Each first sub-tab 1311 has the same size in the winding direction of the electrode assembly 13" may be understood as adjacent first sub-tabs 1311 have the same size in the winding direction, so that the first tab 131 has a regular shape, for example, the first tab 131 is square, or the first tab 131 is approximately square. "In the direction from the inner turn to the outer turn of the electrode assembly 13, the sizes of the plurality of first sub-tabs 1311 in the winding direction of the electrode assembly 13 gradually increase" may be understood as that, for the two adjacent first sub-tabs 1311, the size of the first sub-tab 1311 on the inner turn in the winding direction is smaller than the size of the first sub-tab 1311 on the outer turn. For example, in the direction from the inner turn to the outer turn of the electrode assembly 13, the sizes of the plurality of first sub-tabs 1311 in the winding direction of the electrode assembly 13 gradually increase, and the surface of the first tab 131 is sector-shaped, or approximately sector-shaped (see FIG. 14).

In the above technical solution, in some embodiments, by setting the size of each of the first sub-tabs 1311 in the winding direction of the electrode assembly 13 to the same size, the processing difficulty of the first sub-tabs 1311 can be reduced (for example, when die-cutting the tabs, the die-cutting size of each of the first sub-tabs 1311 is the same, and therefore, the die-cutting efficiency is high), thereby improving the manufacturing efficiency of the battery 100. In some embodiments, in the direction from the inner turn to the outer turn of the electrode assembly 13, by setting the sizes of the plurality of first sub-tabs 1311 in the winding direction of the electrode assembly 13 to gradually increase, the first tab 131 is capable of fully utilizing the internal space of the shell 11, so that the first tab 131 has a large area to improve the current flow capacity between the first tab 131 and the electrode terminal 12, and therefore the battery 100 has desirable charging and discharging performance.

According to some embodiments of the present application, the electrode assembly 13 is a wound electrode assembly 13, the second tab 132 includes a plurality of second sub-tabs 1321, and each of the second sub-tabs 1321 has the same size in a winding direction of the electrode assembly 13. Alternatively, in a direction from the inner turn to the outer turn of the electrode assembly 13, the sizes of the plurality of second sub-tabs 1321 gradually increase in the winding direction of the electrode assembly 13.

The wound electrode assembly 13 includes a plurality of turns of the second electrode plates, and the second tab 132 includes a plurality of second sub-tabs 1321. The number of the second sub-tabs 1321 may be equal to the number of turns of the second electrode plates, or less than the number of turns of the second electrode plates.

"Each second sub-tab 1321 has the same size in the winding direction of the electrode assembly 13" may be understood as adjacent second sub-tabs 1321 have the same size in the winding direction, so that the second tab 132 has a regular shape, for example, the second tab 132 is square, or the second tab 132 is approximately square (see FIG. 14).

"In the direction from the inner turn to the outer turn of the electrode assembly 13, the sizes of the plurality of second sub-tabs 1321 in the winding direction of the electrode assembly 13 gradually increase" may be understood as that, for the two adjacent second sub-tabs 1321, the size of the second sub-tab 1321 on the inner turn in the winding direction is smaller than the size of the second sub-tab 1321 on the outer turn. For example, in the direction from the inner turn to the outer turn of the electrode assembly 13, the sizes of the plurality of first sub-tabs 1311 in the winding direction of the electrode assembly 13 gradually increase, and the surface of the first tab 131 is sector-shaped, or approximately sector-shaped.

In the above technical solution, in the above technical solution, in some embodiments, by setting the size of each of the second sub-tabs 1321 in the winding direction of the electrode assembly 13 to the same size, the processing difficulty of the second sub-tabs 1321 can be reduced (for example, when die-cutting the tabs, the die-cutting size of each of the second sub-tabs 1321 is the same, and therefore, the die-cutting efficiency is high), thereby improving the manufacturing efficiency of the battery 100. In some embodiments, in the direction from the inner turn to the outer turn of the electrode assembly 13, by setting the sizes of the plurality of second sub-tabs 1321 in the winding direction of the electrode assembly 13 to gradually increase, the second tab 132 is capable of fully utilizing the internal space of the shell 11, so that the second tab 132 has a large area to improve the current flow capacity between the second tab 132 and the shell 11, and therefore the battery 100 has desirable charging and discharging performance.

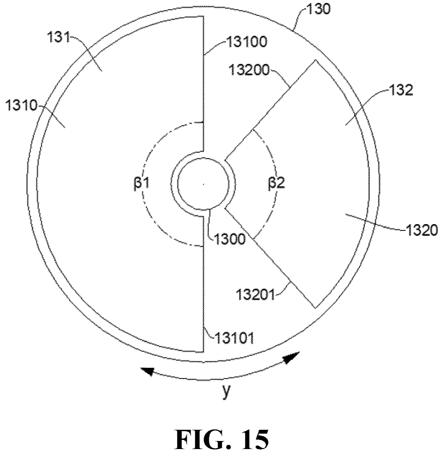

According to some embodiments of the present application, referring to FIG. 15, and FIG. 15 is a top view of an electrode assembly 13 according to some embodiments of the present application.

The first tab 131 has a fifth surface 1310 facing the first wall 110, and the fifth surface 1310 is sector-shaped.

The fifth surface 1310 is a surface of the first tab 131 facing the first wall 110. In some embodiments, the fifth surface 1310 is the surface of the first tab 131 electrically connected to the first adapter 14. For example, the fifth surface 1310 is connected to the second connecting portion 141 of the first adapter 14.

"The fifth surface 1310 is sector-shaped" may be understood as that the fifth surface 1310 extends in an arc-shaped trajectory. For example, the end face of the electrode assembly 13 is circular, and the fifth surface 1310 extends in the peripheral direction of the end face of the electrode assembly 13 to form a sector with the center of the end face of the electrode assembly 13 as the center of the circle.

In the above technical solution, by setting the fifth surface 1310 of the first tab 131 to a sector-shaped structure, the first tab 131 is capable of fully utilizing the internal space of the shell 11, so that the first tab 131 has a large area to improve the current flow capacity between the first tab 131 and the first wall 110, and therefore the battery 100 has desirable charging and discharging performance.

According to some embodiments of the present application, in the peripheral direction y of the main body part, the fifth surface 1310 has a first edge 13100 and a second edge 13101 that are far away from each other, and an angle between the first edge 13100 and the second edge 13101 is β1, where 0<β1≤180°.

In some embodiments, the arc-shaped trajectory of the fifth surface 1310 is parallel to the peripheral direction y of the main body part, and the center of the circle corresponding to the fifth surface 1310 may be located on the central axis of the main body part 130.

The first edge 13100 and the second edge 13101 are two edges of the fifth surface 1310 that are away from each other on its arc-shaped trajectory, and the angle between the first edge 13100 and the second edge 13101 may correspond to the central angle of the sector-shaped fifth surface 1310.

In some embodiments, the angle β1 between the first edge 13100 and the second edge 13101 is less than or equal to 180°. For example, the angle β1 between the first edge 13100 and the second edge 13101 may be 1°, 2°... 45°, 46°, 47°... 90°, 91°, 92°... 180°, or any value between two adjacent values.

In the above technical solution, by setting the angle β1 formed between the first edge 13100 and the second edge 13101 of the first tab 131 to be less than or equal to 180 degrees, a central angle of the fifth surface 1310 of the sector-shaped first tab 131 is less than or equal to 180 degrees, so as to alleviate the phenomenon of internal short circuit of the battery cell 10 caused by easy overlapping of the first tab 131 and the second tab 132 due to the large space occupied by the first tab 131, so that the battery 100 has high reliability.

According to some embodiments of the present application, the second tab 132 has a sixth surface 1320 facing the first wall 110, and the sixth surface 1320 is sector-shaped.

The sixth surface 1320 is a surface of the second tab 132 facing the first wall 110. In some embodiments, the sixth surface 1320 is the surface of the second tab 132 electrically connected to the second adapter 15.

"The sixth surface 1320 is sector-shaped" may be understood as that the sixth surface 1320 extends in an arc-shaped trajectory. For example, the end face of the electrode assembly 13 is circular, and the sixth surface 1320 extends in the peripheral direction of the end face of the electrode assembly 13 to form a sector with the center of the end face of the electrode assembly 13 as the center of the circle.

In the above technical solution, by setting the sixth surface 1320 of the second tab 132 to a sector-shaped structure, the second tab 132 is capable of fully utilizing the internal space of the shell 11, so that the second tab 132 has a large area to improve the current flow capacity between the second tab 132 and the electrode terminal 12, and therefore the battery 100 has desirable charging and discharging performance.

According to some embodiments of the present application, in the peripheral direction y of the main body part, the sixth surface 1320 has a third edge 13200 and a fourth edge 13201 that are far away from each other, and an angle between the third edge 13200 and the fourth edge 13201 is β2, where 0<β2≤270°.

In some embodiments, the arc-shaped trajectory of the sixth surface 1320 is parallel to the peripheral direction y of the main body part, and the center of the circle corresponding to the sixth surface 1320 may be located on the central axis of the main body part 130.

The third edge 13200 and the fourth edge 13201 are two edges of the sixth surface 1320 that are away from each other on its arc-shaped trajectory, and the angle between the third edge 13200 and the fourth edge 13201 may correspond to the central angle of the sector-shaped sixth surface 1320.

In some embodiments, the angle β2 between the third edge 13200 and the fourth edge 13201 is less than or equal to 270°. For example, the angle β2 between the third edge 13200 and the fourth edge 13201 may be 1°, 2°... 45°, 46°, 47°... 90°, 91°, 92°... 179°, 180°... 268°, 269°, 270°, or any value between two adjacent values.

In the above technical solution, by setting the angle β2 formed between the third edge 13200 and the fourth edge 13201 of the second tab 132 to be less than or equal to 270 degrees, a central angle of the second surface 1410 of the sector-shaped second tab 132 is less than or equal to 270 degrees, so as to alleviate the phenomenon of internal short circuit of the battery cell 10 caused by easy overlapping of the second tab 132 and the first tab 131 due to the large space occupied by the second tab 132, so that the battery 100 has high reliability.

According to some embodiments of the present application, a battery 100 is further provided, and the battery 100 includes the battery cell 10 provided in the foregoing.

As shown in FIG. 2, the battery 100 may further include a box 20, and the battery cell 10 is accommodated in the box 20.

In some embodiments, the box 20 includes a first box body 21 and a second box body 22. The first box body 21 and the second box body 22 cover each other, and the first box body 21 and the second box body 22 together define an assembling space for accommodating the battery cell 10.

Optionally, the second box body 22 may be of a hollow structure with one end open, the first box body 21 may be of a plate-like structure, and the first box body 21 covers the opening side of the second box body 22, so that the first box body 21 and the second box body 22 together define the assembling space. Both of the first box body 21 and the second box body 22 may also be of a hollow structure with one side open, and the opening side of the first box body 21 covers the opening side of the second box body 22.

Of course, the box 20 formed by the first box body 21 and the second box body 22 may be in a variety of shapes, such as a cylinder, a rectangular solid, or the like. For example, in FIG. 2, the box 20 is of a rectangular solid structure.

Optionally, there may be one or a plurality of battery cells 10 arranged in the box 20. For example, in FIG. 2, there may be a plurality of battery cells 10 arranged in the box 20 of the battery 100, and the plurality of battery cells 10 may be connected in series, in parallel, or in parallel-series, and the parallel-series connection means that the plurality of battery cells 10 are connected in both series and parallel. The plurality of battery cells 10 may be directly connected in series, in parallel, or in parallel-series, and then the entirety formed by the plurality of battery cells 10 is accommodated in the box 20.

The battery 100 may further include other structures. For example, the battery 100 may further include a busbar component, and the busbar component connects the plurality of battery cells 10 so as to realize the electrical connections between the plurality of battery cells 10.

It should be noted that, in some embodiments, the battery 100 may not be provided with a box 20. The battery 100 includes a plurality of battery cells 10, and the battery 100 composed of the plurality of battery cells 10 may be directly assembled on an electrical apparatus to provide electrical energy to the electrical apparatus through the plurality of battery cells 10. In other words, the box 20 may be used as a part of the electrical apparatus. The electrical apparatus is, for example, a vehicle, and the box 20 may be used as a part of a chassis structure of the vehicle. For example, a part of the box 20 may become at least a part of a floor of the vehicle, or a part of the box 20 may be at least a part of a cross beam and a longitudinal beam of the vehicle.

According to some embodiments of the present application, an electrical apparatus is further provided in some embodiments of the present application, and the electrical apparatus includes the battery cell 10 provided in the foregoing, and the battery cell 10 is configured to provide electric energy.

According to some embodiments of the present application, a battery cell 10 is provided, see FIG. 3 to FIG. 13. The battery cell 10 includes a shell 11, an electrode terminal 12, an electrode assembly 13, a first adapter 14, a second adapter 15, and an insulating member 16. The shell 11 has a first wall 110. The electrode terminal 12 is mounted on the first wall 110 in an insulated manner. The electrode assembly 13 is accommodated in the shell 11, and the electrode assembly 13 includes a main body part 130, a first tab 131, and a second tab 132. The first tab 131 and the second tab 132 have opposite polarities. In a thickness direction x of the first wall, the first tab 131 and the second tab 132 are both arranged at one end of the main body part 130 facing the first wall 110. The first adapter 14 connects the first wall 110 and the first tab 131. The second adapter 15 connects the electrode terminal 12 and the second tab 132. The insulating member 16 is located between the electrode assembly 13 and the first wall 110. The insulating member 16 insulates and isolates the first adapter 14 from the second adapter 15. In the thickness direction x of the first wall, an orthographic projection of the first adapter 14 does not overlap an orthographic projection of the second adapter 15. By setting the orthographic projection of the first adapter 14 to not overlap the orthographic projection of the second adapter 15, the risk of internal short circuit of the battery cell 10 caused by the first adapter 14 and the second adapter 15 overlapping each other is capable of being reduced, so that the battery 100 has high reliability.

The first adapter 14 includes a first connecting portion 140 and a second connecting portion 141, the first connecting portion 140 is connected to the first wall 110, and the second connecting portion 141 is connected to the first tab 131.

Referring to FIG. 5 and FIG. 6, the first connecting portion 140 is ring-shaped and is circular ring-shaped. The second adapter 15 is located in a region surrounded by the first connecting portion 140. However, there is no portions of the first connecting portion 140 and the second adapter 15 in contact with each other. The second connecting portion 141 is sector-shaped and may be connected to the sector-shaped first tab 131.

Referring to FIG. 9, the second connecting portion 141 is sector-shaped, the first connecting portion 140 is located at the periphery of the second connecting portion 141, and the first connecting portion 140 is connected to the outer edge of the second connecting portion 141 through the transition portion 142. The first connecting portion 140 is arc-shaped and is far away from the second adapter 15. The central angle corresponding to the first connecting portion 140 is α, α≤180°, and in some embodiments, α≤120°.

Referring to FIG. 10 and FIG. 11, the first connecting portion 140 is ring-shaped. The first connecting portion 140 can extend along an outer edge of the second connecting portion 141 so that the orthographic projection of the first connecting portion 140 in the thickness direction x of the first wall surrounds the orthographic projection of the second connecting portion 141. The first adapter 14 and the second adapter 15 are independent of each other, and the two are separated from each other and do not interfere with each other in any direction. As may be seen in FIG. 10, the first connecting portion 140 is sector-shaped, and the central angle corresponding to the first connecting portion 140 is α, α≤180°, and in some embodiments, α≤120°.

The above descriptions are merely preferred embodiments of the present application and are not intended to limit the present application. For those skilled in the art, the present application may have various modifications and changes. Any modification, equivalent replacement, improvement, and the like made within the spirit and principle of the present application shall fall within the scope of protection of the present application.

## Claims

1. A battery cell, comprising:
a shell having a first wall;
an electrode terminal mounted on the first wall in an insulated manner;
an electrode assembly accommodated in the shell, wherein the electrode assembly comprises a main body part, a first tab, and a second tab, the first tab and the second tab have opposite polarities, and in a thickness direction of the first wall, the first tab and the second tab are both arranged at one end of the main body part facing the first wall;
a first adapter, wherein the first adapter comprises a first connecting portion and a second connecting portion, the first connecting portion is connected to the first wall, and the second connecting portion is connected to the first tab; and
a second adapter, wherein the second adapter connects the electrode terminal and the second tab;
wherein in the thickness direction of the first wall, an orthographic projection of the first adapter does not overlap an orthographic projection of the second adapter, and in the thickness direction of the first wall, an orthographic projection of the first connecting portion does not overlap an orthographic projection of the second tab.

2. The battery cell according to claim 1, wherein
the first connecting portion has a first surface in contact with the first wall, and the second connecting portion has a second surface in contact with the first tab; and
in the thickness direction of the first wall, there is a height difference h1 between the first surface and the second surface, meeting h1≤3 mm.

3. The battery cell according to claim 2, wherein
a cross-sectional area of the main body part is S, an area of the first surface is S1, and an area of the second surface is S2, meeting S1+S2≤S/2.

4. The battery cell according to any one of claims 1 to 3, wherein
the first adapter further comprises a transition portion, and the transition portion extends from an edge of the second connecting portion in a direction approaching the first wall, and the transition portion connects the first connecting portion and the second connecting portion.

5. The battery cell according to any one of claims 1 to 4, wherein
in the thickness direction of the first wall, the orthographic projection of the first connecting portion is arc-shaped.

6. The battery cell according to any one of claims 1 to 4, wherein
in the thickness direction of the first wall, the orthographic projection of the first connecting portion is ring-shaped, the orthographic projection of the first connecting portion surrounds the orthographic projection of the second connecting portion, and the orthographic projection of the second adapter is located outside the orthographic projection of the first connecting portion.

7. The battery cell according to any one of claims 1 to 6, wherein
in a peripheral direction of the electrode assembly, a central angle corresponding to the first connecting portion is α, meeting 0<α≤180°.

8. The battery cell according to claim 7, wherein
0<α≤120° is met.

9. The battery cell according to any one of claims 1 to 8, wherein
the second adapter comprises a third connecting portion and a fourth connecting portion, the third connecting portion is connected to the electrode terminal, and the fourth connecting portion is connected to the second tab; and
in the thickness direction of the first wall, an orthographic projection of the third connecting portion does not overlap an orthographic projection of the fourth connecting portion.

10. The battery cell according to claim 9, wherein
the third connecting portion has a third surface in contact with the electrode terminal, and the fourth connecting portion has a fourth surface in contact with the second tab; and
in the thickness direction of the first wall, there is a height difference h2 between the third surface and the fourth surface, meeting h2≤3 mm.

11. The battery cell according to claim 10, wherein
the cross-sectional area of the main body part is S, an area of the third surface is S3, and an area of the fourth surface is S4, meeting S3+S4≤S/2.

12. The battery cell according to any one of claims 9 to 11, wherein
the electrode assembly is a wound electrode assembly, the main body part has a central through hole, the central through hole penetrates the main body part in an axial direction of the main body part, and the third connecting portion covers at least part of the central through hole.

13. The battery cell according to any one of claims 1 to 12, wherein
the battery cell further comprises an insulating member, the insulating member is located between the electrode assembly and the first wall, and the insulating member insulates and isolates the first adapter from the second adapter.

14. The battery cell according to claim 13, wherein
the insulating member comprises an insulating body and a partitioning portion, the insulating body is a ring-shaped structure arranged in the peripheral direction of the electrode assembly, the insulating body insulates and isolates the second adapter from the shell, the partitioning portion is connected to an inner ring surface of the insulating body, and the partitioning portion insulates and isolates the first adapter from the second adapter.

15. The battery cell according to any one of claims 1 to 14, wherein
the electrode assembly comprises a first electrode plate and a second electrode plate, and the electrode assembly is a wound electrode assembly;
the first electrode plate comprises a plurality of first sub-tabs, the plurality of first sub-tabs form the first tab, the first electrode plate of the innermost n1 turn is not provided with the first sub-tab, and n1≥1; and/or
the second electrode plate comprises a plurality of second sub-tabs, the plurality of second sub-tabs form the second tab, the second electrode plate of the innermost n2 turn is not provided with the second sub-tab, and n2≥1.

16. The battery cell according to any one of claims 1 to 15, wherein
the electrode assembly comprises a first electrode plate and a second electrode plate, and the electrode assembly is a wound electrode assembly;
the first electrode plate comprises a plurality of first sub-tabs, the plurality of first sub-tabs form the first tab, the first electrode plate of the outermost m1 turn is not provided with the first sub-tab, and m1≥1; and/or
the second electrode plate comprises a plurality of second sub-tabs, the plurality of second sub-tabs form the second tab, the second electrode plate of the outermost m2 turn is not provided with the second sub-tab, and m2≥1.

17. The battery cell according to any one of claims 1 to 16, wherein
the electrode assembly is a wound electrode assembly, the first tab comprises a plurality of first sub-tabs, and each of the first sub-tabs has the same size in a winding direction of the electrode assembly; or
in a direction from the inner turn to the outer turn of the electrode assembly, the sizes of the plurality of first sub-tabs gradually increase in the winding direction of the electrode assembly.

18. The battery cell according to any one of claims 1 to 17, wherein
the electrode assembly is a wound electrode assembly, the second tab comprises a plurality of second sub-tabs, and each of the second sub-tabs has the same size in the winding direction of the electrode assembly; and
in the direction from the inner turn to the outer turn of the electrode assembly, the sizes of the plurality of second sub-tabs gradually increase in the winding direction of the electrode assembly.

19. The battery cell according to any one of claims 1 to 18, wherein
the first tab has a fifth surface facing the first wall, and the fifth surface is sector-shaped.

20. The battery cell according to claim 19, wherein
in the peripheral direction of the main body part, the fifth surface has a first edge and a second edge that are far away from each other, and an angle between the first edge and the second edge is β1, wherein 0<β1≤180°.

21. The battery cell according to any one of claims 1 to 20, wherein
the second tab has a sixth surface facing the first wall, and the sixth surface is sector-shaped.

22. The battery cell according to claim 21, wherein
in the peripheral direction of the main body part, the sixth surface has a third edge and a fourth edge that are far away from each other, and an angle between the third edge and the fourth edge is β2, wherein 0<β2≤270°.

23. A battery, comprising the battery cell according to any one of claims 1 to 22.

24. An electrical apparatus, comprising the battery cell according to any one of claims 1 to 22, wherein the battery cell is configured to provide electric energy.
